Europäisches Patentamt

European Patent Office

Office européen des brevets

(11) Publication number: 0 506 135 A2

# EUROPEAN PATENT APPLICATION

(21) Application number: 92105460.7

(22) Date of filing: 30.03.92

(51) Int. Cl.5: G06F 15/16

(30) Priority: 21.08.91 US 748302
29.03.91 US 677543

(43) Date of publication of application:
30.09.92 Bulletin 92/40

(84) Designated Contracting States:
DE FR GB

(71) Applicant: International Business Machines
Corporation
Old Orchard Road
Armonk, N.Y. 10504(US)

(72) Inventor: Olnowich, Howard Thomas
2922 Twilight Drive
Endwell, New York 13760(US)
Inventor: Lusch, Robert Francis
3100 Cortland Drive
Vestal, New York 13850(US)
Inventor: Jabusch, John David
3015 Hall Street
Endwell, New York 13760(US)

(74) Representative: Schäfer, Wolfgang, Dipl.-Ing.
European Patent Attorney, IBM Deutschland
GmbH, Schönaicher Strasse 220
W-7030 Böblingen(DE)

(54) Multi-sender/switching apparatus for status reporting over unbuffered asynchronous multi-stage networks.

(57) A multi-sender/switching apparatus provides a means applicable to performing either broadsender and multi-sender transfers over switching networks besides the standard network interconnections, such as point-to-point, broadcast, and multi-cast transfers. The new broadsender and multi-sender operations allow communicating over multi-stage networks, and are defined as the ability of all or multiple elements attached to the network to participate simultaneously in the same network operation on a joint basis. The system provides a capability unavailable over synchronous buffered and other types of networks. The combination of the broad-send and broadcast functions enable every element attached to an unbuffered multi-stage network to not only participate in a common network function, but to monitor the result at the same time. Likewise, through combining multisend and multi-cast functions, multiple elements attached to the said multi-stage network can participate in a common network function and monitor the result at the same time. A multi-stage network can now perform a distributed arbitration function heretofore known only to multi-drop bus communication systems. The multi-sender/switch also incorporates a new asynchronous hand-shaking protocol that enables a positive feedback indication to be returned to the multiple senders of multi-cast or broadcast operations to inform them that the multi-sender operation is progressing correctly to all elements involved in the operation.

FIG.1

## RELATED APPLICATIONS

The present United States patent application claims priority and is related to the following application of which this is a continuation-in-part: USSN 07/677,543, Filed 03/29/91 entitled "ALLNODE SWITCH - AN UNCLOCKED, UNBUFFERED, ASYNCHRONOUS, SWITCHING APPARATUS" (IBM Docket 9-88-078); Lusch et al, EP Application No. 92 101 705.9.

The present United States patent application is also related to the following United States patent applications filed concurrently herewith.

USSN 07/ 748,316 , Filed 08/21/91 (IBM Docket EN9-91-030A) entitled "BROADCAST/SWITCHING APPARATUS FOR EXECUTING BROADCAST/MULTI-CAST TRANSFERS OVER UNBUFFERED ASYNCHRONOUS SWITCHING NETWORKS"; Olnowich et al.

USSN 07/ 748,303 , Filed 08/21/91 (IBM Docket EN9-91-049) entitled "SYNC-NET - A BARRIER SYNCHRONIZATION APPARATUS FOR MULTI-STAGE NETWORKS"; Olnowich et al.

USSN 07/ 748,295 , Filed 08/21/91 (IBM Docket EN9-91-050) entitled "GVT-NET - A GLOBAL VIRTUAL TIME CALCULATION APPARATUS FOR MULTI-STAGE NETWORKS"; Olnowich et al.

These applications and the present application is owned by one and the same assignee, namely, International Business Machines Corporation of Armonk, New York.

The descriptions set forth in the previous application and the concurrently filed applications are hereby incorporated herein by reference.

## FIELD OF THE INVENTION

This invention relates to unbuffered asynchronous switching networks and particularly to byte wide parallel hardware using parallel crossbar switches for a byte parallel multi-sized interface switch for supporting network operations involving multiple sending elements concurrently and jointly participating in a single coordinated communication function over multi-staged switching networks for status reporting and performing other multi-sender operations that might be deemed necessary.

## BACKGROUND OF THE INVENTION

In the patent literature, there are many patents which deal with broadcast mechanisms, of which multi-sender operations are a subset. However, most of the patent literature deals with the multi-receiver aspect of the general broadcast function with one sender transmitting the same message to multiple elements simultaneously. However, the present invention discloses a new aspect of the broadcast function where multiple senders can transmit simultaneously to the same single receiving element or to multiple receiving elements.

Some multiple receiver broadcast mechanisms are not implemented by hardware. For instance U.S. Patent 4,818,984 to S. J. Chang et al. issued on Apr. 4, 1989, describes a broadcast mechanism implemented in software. The present multi-sender broadcast invention differs in that it must be implemented in hardware.

Switching networks are different from busses and LANS (local area networks). For instance, it would be recognized that U.S. Patent 4,926,375 to F. L. Mercer et al. issued on May 15, 1990, relates to a broadcast mechanism implemented over a multi-drop bus. U.S. Patent 4,706,080 to W. D. Sincoskie issued on Nov. 10, 1987, describes a broadcast mechanism implemented over several multi-drop busses; as does U.S. Patent 4,855,899 to S. D. Presant issued on Aug. 8, 1989; as also does the publication by IBM in the Technical Disclosure Bulletin. IBM TDB Vol. 30, No. 1, 6/87 pg 72-78, Poll Actuated Multiple Access Technique for Broadgathering Systems.

There are several patents which describe broadcast mechanisms for LANS. U.S. Patent 4,754,395 to B. P. Weisshaar et al. issued on June 28, 1988, describes a broadcast mechanism implemented over a serial, loop-connected LAN. U.S. Patent 4,835,674 to R. M. Collins et al. issued on May 30, 1989, describes a broadcast mechanism implemented over multi-drop BUSSES tied to LANS and broadcasting over the entire set-up.

Some broadcast mechanisms are designed for synchronized multiplexed time slot, bit oriented networks, as represented by U.S. Patent 4,897,834 to J. R. Peterson et al. issued on Jan. 30, 1990, and others, such as U.S. Patent 4,766,592 to E. Baral et al. issued on Aug. 23, 1988, describe a broadcast mechanism implemented over a synchronized, multiplexed time slot, telephone line hook-up. IBM TDB Vol. 22, No. 12, 5/80 pg 5450-52, Distributed Star Network with Unrooted Tree Topology describes a broadcast mechanism implemented over an unrooted tree network which uses synchronous transmissions and packet switching.

Other mechanisms are designed for transmission lines. U.S. Patent 4,935,866 to R. Sauvajol et al. issued on June 19, 1990, a broadcast mechanism implemented over a synchronous, transmission line, communication link. U.S. Patent 4,941,084 to M. Terada et al. issued on July 10, 1990, This patent describes a broadcast mechanism implemented over a transmission line, loop interconnect arrangement. U.S. Patent 4,815,105 to S. Bottoms et al. issued on Mar. 21, 1989, a broadcast mechanism implemented over a transmission line, telephone line type interconnect arrangement. While telephone switches have employed crossbar switches, generally they do not use parallel connect crossbar switches.

There is a need for improved switching network approaches using parallel connect crossbar switches (a non-loop or transmission line approach) for circuit switching networks for asynchronous, dedicated path (not time slotted), byte wide parallel direct connect switching. The present broadcast mechanism relates to multi-stage networks.

Some prior multi-stage switching networks have been developed. U.S. Patent 4,956,772 to P. M. Neches issued on Sept. 11, 1990, provided a buffered packet synchronous switch. This complex single serial interface line switch requires data recovery capabilities. It needs a complex priority determination built into each switch stage and brings the broadcast command bits into the switch serially. Another packet switch which relates to a multi-stage switching network is U.S. Patent 4,701,906 to M. N. Ransom et al. issued on Oct. 20, 1987. It also is a buffered synchronous packet switch and provides for a handshaking interface. It brings the broadcast command bits into the switch serially, and the complex switch also requires data recovery capabilities. It is a single serial interface and appears not to have considered the need for an asynchronous byte wide parallel interface for broadcast applications.

Broadcasting a message from one device to N devices through a multistage network composed of BUFFERED switching devices is a simple task. At each switch the message is fanned-out to all the switch outputs by inserting it into a queue (ordered buffer) associated with each output. The transmitter of the broadcast message does not have to concern itself with contention at each switch output (the output being busy transmitting previously initiated messages). If the output is busy, the broadcast message goes into a queue of messages waiting to use the output, and eventually it will get its turn and the broadcast message will propagate slowly through the network. However, there are no known methods for the multi-sender's sharing of the same communication simultaneously over buffered networks. The closest state of the art to the present invention is the combining switch of the NYU Ultracomputer as described in IEEE Trans. Computers C-32, 175-189 (Feb. 1983) and the IBM Research Parallel Processor Prototype described in the "Proceedings of 1985 International Conference on Parallel Processing", pp. 764-769. However, the combining switch was never successful and never provided true multi-sender operations but staggered them at different times over different switching elements. The present invention allows multi-sender operations to occur at the same instant and involve multiple switches simultaneously.

## SUMMARY OF THE INVENTION

The present invention provides a solution applicable to performing either broadsender and multi-sender transfers over switching networks besides the standard network interconnections such as point-to-point, broadcast, and multi-cast transfers. The present invention describes this new and unique means of communicating over multi-stage networks, called broadsender and multi-sender operations, which are defined as the ability of all or multiple elements attached to the network to participate simultaneously in the same network operation on a joint basis. In particular, the invention applies to byte wide parallel hardware using parallel crossbar switches for a byte parallel multi-sized interface switch for communicating over unbuffered, multi-staged switching networks. Our solution not only makes the broad-send and multi-send easy to execute over unbuffered asynchronous networks, but it provides a capability unavailable over synchronous buffered and other types of networks. The combination of the broad-send and broadcast functions enable every element attached to the multi-stage network to not only participate in a common network function but to monitor the result at the same time. Likewise, through combining multi-send and multi-cast functions, multiple elements attached to the multi-stage network can participate in a common network function and monitor the result at the same time. This means for the first time a multi-stage network can perform a distributed arbitration function heretofore known only to multi-drop bus communication systems, such as the IBM Microchannel as described in the IBM Hardware Technical Reference for the Microchannel Architecture (IBM Publication SA23-2647-00), where each element places its arbitration level on the bus simultaneously. On the micro-channel bus, zeroes dominate over ones, and each sending element can read the bus to determine if the arbitration level it placed on the bus has dominated or not. The present invention is capable of performing the same type of arbitration operation over the multi-stage network with the exception being that ones will dominate over the network instead of zeroes.

The multi-sender method described in this invention is also predicated on the unbuffered asynchronous broadcast/switch described in the patent application entitled "Allnode Switch - an unclocked, unbuffered, asynchronous, switching apparatus" (IBM Docket 9-88-078), which performs the basic point-to-point transfers over the network, by connecting one sending element to one receiving element and allowing many such connections to be established simultaneously.

The multi-sender method described in this invention is also predicated on the unbuffered asynchronous broadcast/switch described in SSN 07/ 748,316 , Filed 08/21/91 (IBM Docket EN9-91-030A) filed concurrently herewith and incorported by reference "Broadcast/Switching Apparatus for Executing Broadcast/Multi-cast Transfers over Unbuffered Asynchronous Switching Networks," which performs single sender broadcast and multi-cast transfers over the network by connecting one sending element to all or a commanded subset of the receiving elements and allowing one set of such connections to be established at any given time.

According to the objects of our invention, functions, interface lines, and hardware are added to the said Allnode Switch and Broadcast Switch to enhance it to also perform broadsender and multi-sender operations from any element of the network. Our invention of the multi-sender switching apparatus will support all of the following operations:

1. All nodes sending to one node (Broad-send)
2. ALL nodes sending to all nodes (Broad-send and broadcast)
3. All nodes sending to multiple nodes (Broadsend and multi-cast)
4. Multiple nodes sending to one node (Multi-send)
5. Multiple nodes sending to all nodes (Multi-send and broadcast)
6. Multiple nodes sending to multiple nodes (Multi-send and multi-cast), plus
7. All the standard, broadcast, and multi-cast connections supported by the Allnode Switch and the Broadcast Switch

In accordance with the invention, the multi-sender switching apparatus provides an unbuffered multi-stage network for interconnecting many system elements. The invention apparatus provides a means for broad-sending or multi-sending commands or messages jointly and simultaneously amongst these elements. Commands are usually short transfers of one or several bytes or half-bytes which communicate commands such as arbitration, status reporting, error reporting, etc. Messages can be of any length and can follow a multi-sender command. The system elements can be processors, I/O devices, and other system elements which use the network as a means for communication among the elements. Within this environment our invention provides characteristically that !he network can operate in a multi-sender mode to send commands simultaneously from any number of elements to any number of other elements.

It is a feature of our invention that we provide a unique interface sequence to each element to define the activation of broadsender or multi-sender mode. The multi-sender switching apparatus could process one broadcast or multi-cast operation at a time, in that it will reject other later attempts to broadcast or multi-cast until present broadcast or multi-cast transmissions complete. However, the multi-sender function of the present invention allows any sending element to join the broadcast or multi-cast in progress at a specified time and to connect simultaneously to the same element or the same entire set of elements to which the present broadcast or multi-cast is connected.

It is a feature of our invention that we provide over the multi-sender switching apparatus interface a unique interface sequence that can be relayed through the multi-stage network to the receiving element to cause a commanded break in the data flow and a resynchronization of the asynchronous receiver when the data flow resumes. This adds flexibility to the previous Allnode and broadcast switches by enabling longer messages to be transmitted without losing synchronization and allowing incongruities in the data flow.

By our inventions, we provide a hardware circuit for a common multi-sender function which works equally well at any stage whatsoever of the network.

The multi-sender switching apparatus could delay the connection of a requested message until all network paths become available and until all multi-senders have joined the operation. Also, the invention apparatus has the capability of providing a positive feedback acknowledgement that it has made the connections to all of the commanded paths and that all multisenders have joined the operation. This is provided uniquely for each stage of the network.

Also, we have included a further acknowledgement means to provide to each sending element a positive verification and feedback that a multi-sender transmission sequence has been completed successfully.

These features and other improvements are detailed in the following description. For a better understanding of the inventions, together with related features, reference the previous Allnode switch and Broadcast switch patent applications for some additional detailed background. Further, reference should be made to the following description and the drawings described below.

BRIEF DESCRIPTION OF THE DRAWINGS

FIGURE 1 illustrates generally our preferred embodiment of the present invention as a four input to four output crossbar, multi-sender switching apparatus.

FIGURE 2 illustrates in more detail how the 4x4 crossbar, multi-sender switching apparatus makes the internal connections that logically OR multiple inputs to multiple outputs simultaneously.

FIGURE 3 illustrates a more detailed schematic of the 4x4 crossbar, multi-sender switching apparatus that defines its interface connections.

FIGURE 4 shows a typical method for cascading the preferred 4x4 embodiment of the invention multi-sender switching apparatus to accommodate systems having more than 4 nodes.

FIGURE 5 illustrates a typical broadsender and broadcast example showing how all nodes interconnect to all nodes simultaneously through two stages of the multi-sender switching apparatus.

FIGURE 6 illustrates a typical multi-sender example showing how nodes 1, 7, 8, and 12 send simultaneously to nodes 2, 4, 10, and 12 through two stages of the multi-sender switching apparatus.

FIGURE 7 shows a schematic block diagram of the simple data flow and control path implementations of the invention multi-sender switching apparatus.

FIGURE 8 illustrates a typical method for generating serial control and data information to be sent to the present invention over four synchronous data lines.

FIGURE 9 illustrates the method of selecting and establishing a transmission path through a network consisting of the invention multi-sender switching apparatus to send simultaneous broadcast data to all nodes commanding them to join the broadcast operation to expand it into a broadsend and broadcast operation.

FIGURE 10 shows a typical timing diagram for the interface signals arriving at one input port of the invention multi-sender switching apparatus, which shows the typical timing sequence that permits a previously non-participating node to join a broadcast or multi-cast operation in progress and transform it into a broadsender or multi-sender operation.

FIGURE 11 illustrates a typical multi-sender example showing how node 7 joins a broadcast initiated by node 3 through two stages of the multi-sender switching apparatus.

FIGURE 12 shows the interface line encoding and timing that enable the pause and resynchronization sequences to occur over the normal multisender switching apparatus connections.

FIGURE 13 illustrates the detailed logic implementation for a portion of the invention multisender switching apparatus. This portion enables the multisender switch to establish a single data transfer, broadcast, multi-cast, broadsender, or multi-sender connection between input port 1 and output port 1 of the preferred 4x4 multi-sender switching apparatus embodiment.

FIGURE 14 illustrates the detailed logic implementation for a portion of the invention multi-sender switching apparatus. This portion enables the multisender switch to establish a single data transfer, broadcast, multi-cast, broadsender, or multi-sender connection between input port 1 and output port 2 of the preferred 4x4 multi-sender switching apparatus embodiment.

FIGURE 15 illustrates the detailed logic implementation for a portion of the invention multisender switching apparatus. This portion enables the multi-sender switch to establish a single data transfer, broadcast, multi-cast, broadsender, or multi-sender connection between input port 2 and output port 1 of the preferred 4x4 multi-sender switching apparatus embodiment.

FIGURE 16 illustrates the detailed logic implementation for a portion of the invention multisender switching apparatus. This portion enables the multi-sender switch to establish a single data transfer, broadcast, multi-cast, broadsender, or multi-sender connection between input port 3 and output port 3 of the preferred 4x4 multi-sender switching apparatus embodiment.

FIGURE 17 illustrates the detailed logic implementation for a portion of the invention multisender switching apparatus. The portion enabling the multisender switch to establish a single data transfer, broadcast, multi-cast, broadsender, or multi-sender connection between input port 4 and output port 4 of the preferred 4x4 multi-sender switching apparatus embodiment.

## DETAILED DESCRIPTION OF THE PREFERRED EMBODIMENTS

When describing our system the reader will see that we have developed and disclosed a multi-sender switching apparatus for quickly and dynamically making and changing connections among input port and output ports to the apparatus based on several supported connection options: any one of the input ports to any one of the output ports; in multi-cast mode: any one of the input ports to any subset of multiple output ports simultaneously; in broadcast mode: from any one of the input ports to all output ports simultaneously; in multi-sender mode: from any number of input ports jointly and simultaneously to any subset of multiple output ports. The unique multi-sender mode is used to perform a logical OR function within the switching apparatus or within any switching network including multiple apparatus devices. The OR function of the apparatus and network can be used by multiple sending elements to perform a new set of switching operations now made available to parallel processing systems, such as simultaneous status reporting from all elements, distributed priority or arbitration schemes, and other concurrent multiple sender operations. Special new functions found in the multi-sender switching apparatus permit any input port to join a broadcast or multi-cast operation in progress and to convert that operation into a multi-sender operation. The disclosed multi-sender switch is self-routing in two cycle times at the same high speed serial rate that data is transferred through the apparatus. The normal mode of the multi-sender switch requires absolutely no synchronization amongst any of the input and output ports which interface to the multi-sender switch. The apparatus also incorporates a new accept function that permits a positive feedback indication to be returned to multiple senders to allow them to advance multi-sender operations in consistently controlled steps based on positive feedback handshaking sequences. New multi-sender apparatus controls are also provided to permit the sending elements to pause and re-synchronize at any time serial data is being transmitted through the apparatus.

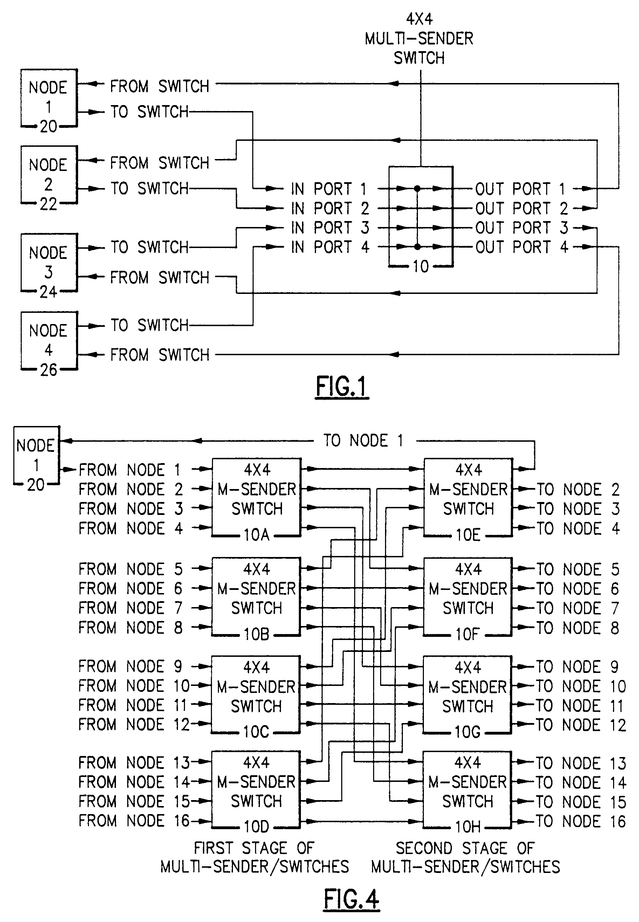

The preferred embodiment is a 4x4 crossbar multi-sender switching apparatus that can function in any of five modes of operation: a switching mode for connecting any of four input ports on a mutually exclusive basis to any one of four output ports, a broadcast mode for connecting any of four input ports on a mutually exclusive basis to all of the four output ports, a multi-cast mode for connecting any one of four input ports on a mutually exclusive basis to two or three of the four output ports, a broadsender mode for connecting all four input ports to one, two, three or four of the output ports as commanded, or a multi-sender mode for connecting any combination of two or three input ports on a mutually exclusive basis to one, two, three or four of the output ports as commanded. Referring to FIGURE 1, the invention multi-sender switching apparatus 10 is unidirectional, which means that data flows in only one direction across the apparatus 10, that being from input to output. Although the multi-sender switching apparatus 10 is unidirectional, it supports bidirectional communication amongst 4 nodes (20, 22, 24, and 26) by connecting the 4x4 multi-sender switching apparatuses 10 as shown in FIGURE 1. Each node 20, 22, 24, and 26 has two sets of unidirectional interconnecting wires, one going to the present invention 10 and one coming from the present invention 10. The connection lines shown internal to the apparatus 10 show that the broadsend function of the apparatus is to connect all four input ports simultaneously to all four output ports as a single, joint operation - simultaneously. The apparatus 10 provides a further but similar function of multi-sender connections to connect any multiple number of input ports to any number of output ports.

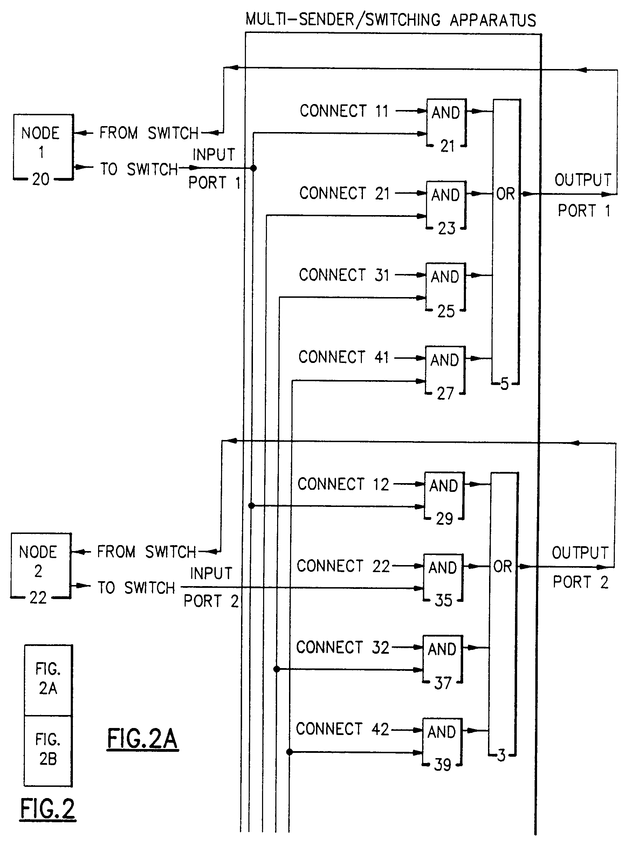

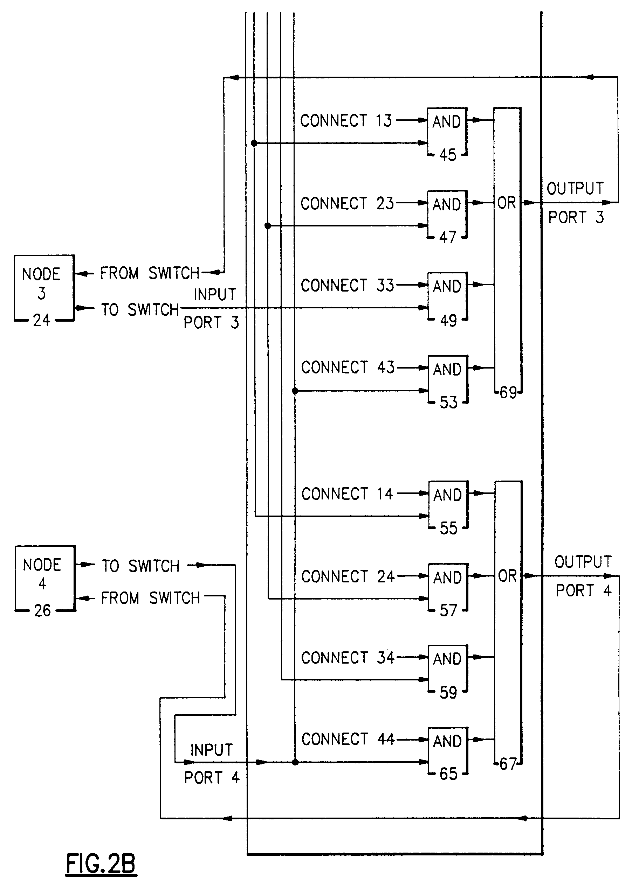

Referring to FIGURE 2, a more detailed view of the internal logic and wiring connections is shown illustrating the exact method used in the apparatus 10 to enable broadsender and multi-sender connections to be established. Every output port function of invention apparatus 10 is generated by multiplexer logic implemented by four AND gates and one OR gate as illustrated by AND gates 21, 23, 25, and 27 and OR gate 5 for output port 1, and similar gate combinations for each of the other 3 output ports. Each AND gate, such as gate 21, contains 2 inputs which are logically ANDed internal to the gate; one input comes directly from an input port, such as the representative "TO SWITCH" signal coming unidirectionally from Node 1 to invention apparatus 10 input port 1, and the other AND gate 21 input (CONNECT 11) coming from internal connection command latches that specify when an input to output connection is to be established internal to the invention apparatus 10. For AND gate 21, the CONNECT 11 input is interpreted as meaning that input port 1 has been commanded to be connected to output port 1. When the CONNECT 11 signal goes to a logical 1, AND gate 21 is enabled to functionally pass whatever logic levels are on input port 1 at any instant in time through gate 21 to OR gate 5, where they are logically ORed with any signals being passed simultaneously through AND gates 23, 25, and 27, and sent to output port 1. The result of this function is that the invention apparatus 10 simultaneously connects all 4 input ports to output port 1, when the CONNECT 11, CONNECT 21, CONNECT 31, and CONNECT 41 inputs to AND gates 21, 23, 25, and 27, respectively, are all logical ones simultaneously. Since the OR function provided by gate 5 causes a logical 1 to dominate, the signal sent to output port 1 will be a one if any of the four input ports are a logical one, or it will be a zero if all of the input ports are at the zero state. Note that the signal sent to output port 1 is routed back to Node 1 coming to it on the representative "FROM SWITCH" unidirectional interface line and enabling node 1 to monitor the OR function generated by the invention apparatus 10 at the same time it is jointly contributing to the value of that function by sending information over its "TO SWITCH" interface signals to the invention apparatus 10. Thus, Node 1 can be simultaneously sending information (logical ones or zeroes) to the invention apparatus 10, while at the same time it is monitoring the result of the OR function performed at the invention apparatus 10. In addition, Node 1 can be comparing the information it is sending to the information it is receiving back, and it can use this information to make logical decisions. If all four input ports are enabled to affect the OR function at gate 5 as seen by output port 1 and Node 1, the function provided by the invention apparatus 10 is herein defined as a broadsender function, meaning that all input ports are activated to OR gate 5 and affecting the information sent on the corresponding output port.

Also, if more than one input port but not all input ports are activated to affect OR gate 5, the function is herein defined as a multi-sender function. Similarly, corresponding functions at OR gates 3, 69, and 67 can be simultaneously activated with OR gate 5 by their corresponding CONNECT XX signals to activated output ports 2, 3, and 4 and send information back to nodes 2, 3, and 4, respectively. Since all four input port signals are unidirectionally routed to all four output ports, it is possible for all four of the OR gates to be making the exact same OR calculations based on the exact same input port connections, and sending the exact same information simultaneously to nodes 1, 2, 3, and 4. The case where all input ports are enabled simultaneously to all OR gates and all output ports (and all nodes are receiving the exact same feedback indications from the output ports) is called broadsend and broadcast because the information received from all sending nodes is being ORed (broadsend) and sent to all receivers (broadcast). Likewise, if information provided by all input ports is going to more than one but less than all output ports as controlled by enabling a subset of the CONNECT XX signals, the function provided is broadsend and multi-cast. If information is provided by more than one but not all input ports to all output ports, the function provided is multi-sender and broadcast. If information is provided by more than one but not all input ports to more than one but not all output ports, the function provided is multi-sender and multi-cast. If information provided by all input ports is going to more than one but less than all output ports, the function provided is broadsend and multi-cast.

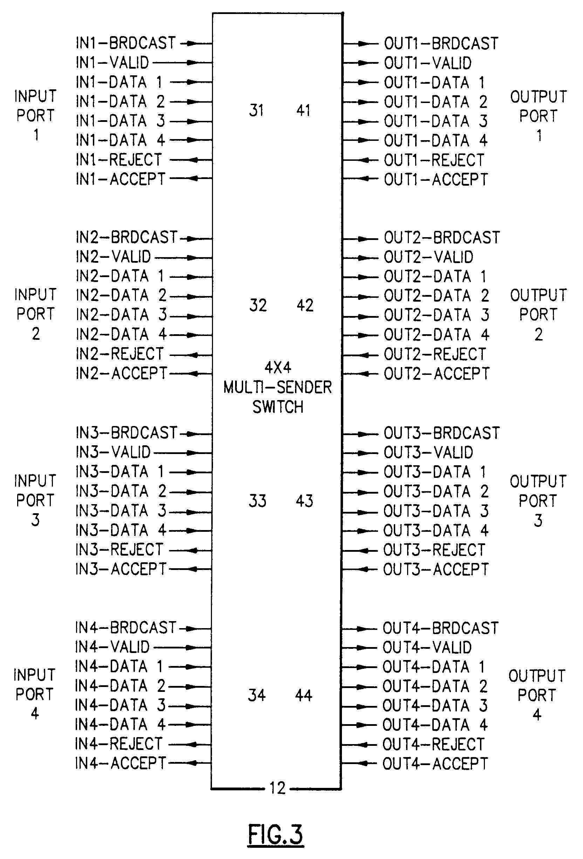

Referring to FIGURE 3, block 12 shows an expanded drawing of the multi-sender switching apparatus 10 and defines in detail the interface lines connecting to the invention apparatus 10. The set of lines 31, 32, 33, and 34 at each input port to the multi-sender switching apparatus 12 are identical in number and function to the set of lines 41, 42, 43, and 44 at each output port. The sets of interface lines to each input and output port contain eight unique signals: four data lines and four control lines (BRDCAST, VALID, REJECT, and ACCEPT) which are differentiated by a prefix of INX- or OUTX- indicating the direction and number of the port (X) that they are associated with. The four data, one BRDCAST, and one VALID lines have a signal flow in the direction going from input to output across apparatus 12, while the REJECT and ACCEPT control lines have a signal flow in the opposite direction.

The sets of input port interface lines 31, 32, 33, and 34 transfer control information to the multi-sender switching apparatus 12 to command and establish input port to output port connections internal to the said apparatus. In addition, the port interface lines also carry data information to be transferred from input port to output port across the multi-sender switching apparatus 12. The four data interface lines contained in interfaces 31, 32, 33, and 34 do not restrict the transfer of data across the apparatus 12 to only 4 bits of information, but rather the said four data lines can each contain a string of serial data making the transmission of any size data possible.

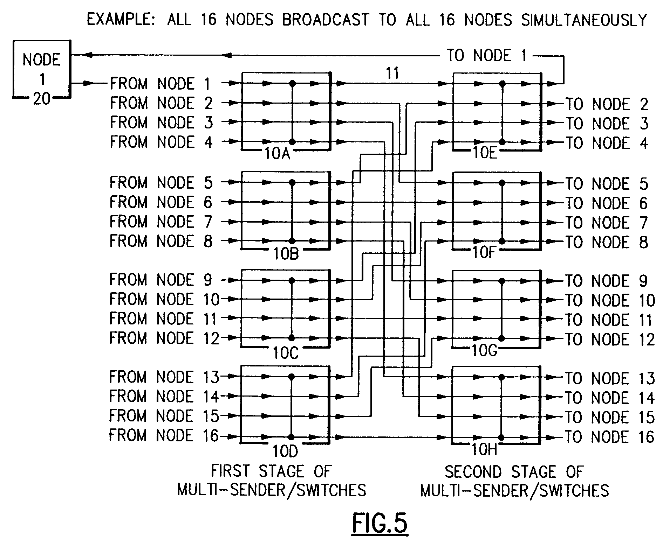

Referring to FIGURE 4, a method is illustrated for increasing the number of nodes in a system by cascading eight multi-sender switching apparatuses 10. The eight cascaded apparatuses are denoted as 10A through 10H to show that they are identical copies of multi-sender switching apparatus 10, varying only in regards to the wiring of their input and output ports. From FIGURE 4 it can be noted that any of sixteen nodes can communicate to any other node over a connection that passes through exactly two of the apparatus 10 blocks. For instance, Node 5 can send messages to Node 15 by traversing apparatus 10B and apparatus 10H. Since all connections are made through two multi-sender switching apparatus 10 blocks, the network made up of the eight apparatus 10 blocks is called a two stage network. Other multi-stage networks can be configured from multi-sender switching apparatus 10 blocks by using three stages, four stages, etc. in a similar manner.

Referring to FIGURE 5, an example is shown of how the multi-sender switching apparatus 10 supports the broadsender and broadcast functions across multi-stage networks. In the example, 16 nodes are shown to illustrate the expandability feature. The connections shown internal to each individual apparatus 10, like 10A, indicate that the apparatus has been commanded to establish a broadsender and broadcast connection that connects all four input ports simultaneously to all four output ports. If all eight apparatuses 10, as shown in FIGURE 5, have been commanded to establish the same broadsend and broadcast connections, the result is that all sixteen nodes can be simultaneously sending data to the network and at the same time all 16 nodes can be monitoring the logical OR of the information being sent by all 16 nodes. This is achieved because the multi-sender switching apparatus 10A logically ORs the data coming from nodes 1, 2, 3, and 4, and transmits the results to all four of its output ports. At the same time, apparatuses 10B, 10C, and 10D OR the inputs from the other 12 nodes in groups of 4 and output the results to their corresponding output ports. Each apparatus 10 in the second stage of the network, like apparatus 10E, logically ORs the input ports coming from each of the 4 first stage apparatuses so that the OR of nodes 1, 2, 3, and 4 is ORed with the OR of nodes 5, 6, 7, and 8, etc. The result is that each of the 16 output ports from stage two of the network provides the OR of all sixteen input ports to each of the 16 nodes, respectively.

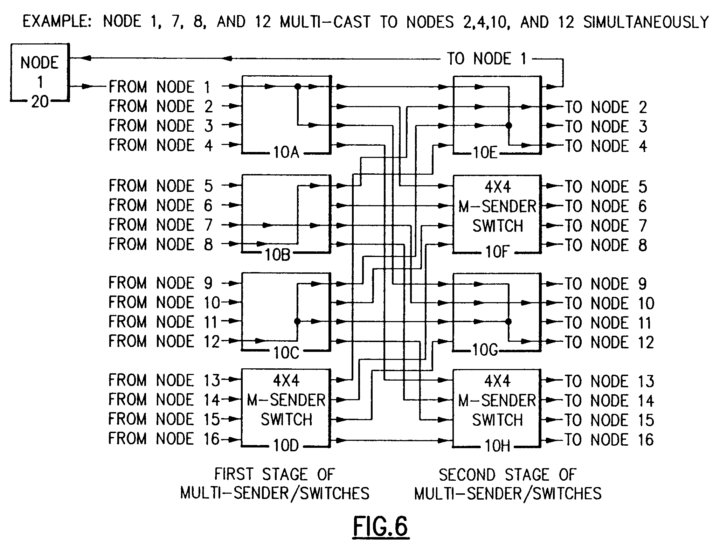

Referring to FIGURE 6, an example is shown of how the multi-sender switching apparatus 10 supports the multi-sender and multi-cast functions across multi-stage networks. The connections shown internal to each of three first stage apparatus 10 blocks (10A, 10B, and 10C) show that specific input port to output port connections have been commanded and established at each apparatus individually. These are different from those commanded and established at the other first stage apparatus 10 blocks. Likewise, the connections shown internal to each of two second stage apparatus 10 blocks (10E and 10G) indicate that specific input port to output port connections have been commanded and established at each apparatus. These connections are the same for both second stage apparatuses 10E and 10G but different from those established by the first stage apparatuses. The connections established show an example of multi-sender and multi-cast connections in that input ports coming from multiple nodes (1, 7, 8, and 12) are connected to multiple output ports going to nodes 2, 4, 10, and 12. If the network has been commanded to establish the multi-sender and multi-cast connections, as shown in FIGURE 6, the result is that nodes 1, 7, 8, and 12 can be simultaneously sending data to the network and at the same time nodes 2, 4, 10, and 12 can be monitoring the logical OR of that data as it is returned via the network. This works similarly to that described above for broadsender and broadcast functions, with the exception that only the commanded input ports are ORed at each stage and that the other input ports are disabled so as not to affect the OR function in any way.

The multi-sender switching apparatus 10 limits the number and combinations of outputs that form an allowable multi-cast subset. The limit is that the connection pattern in every stage of the network must be identical for every apparatus 10 residing in that same stage. For instance, the connection shown in FIGURE 6 is an allowable connection because every active apparatus 10 in the second stage (10E and 10G) supports an identical output connection pattern; i.e., connections are made in both apparatuses to output ports 2 and 4. However, a multi-sender and multi-cast connection to nodes 2, 4, 11, and 12 would not be an allowable multi-cast operation because 10E and 10G would no longer support identical output connection patterns, as 10E would connect to output ports 2 and 4, and 10G would have to connect to output ports 3 and 4. The multi-cast limitation occurs because of the simple scheme used to set up multi-sender switching apparatus 10 connections, which is described in detail below.

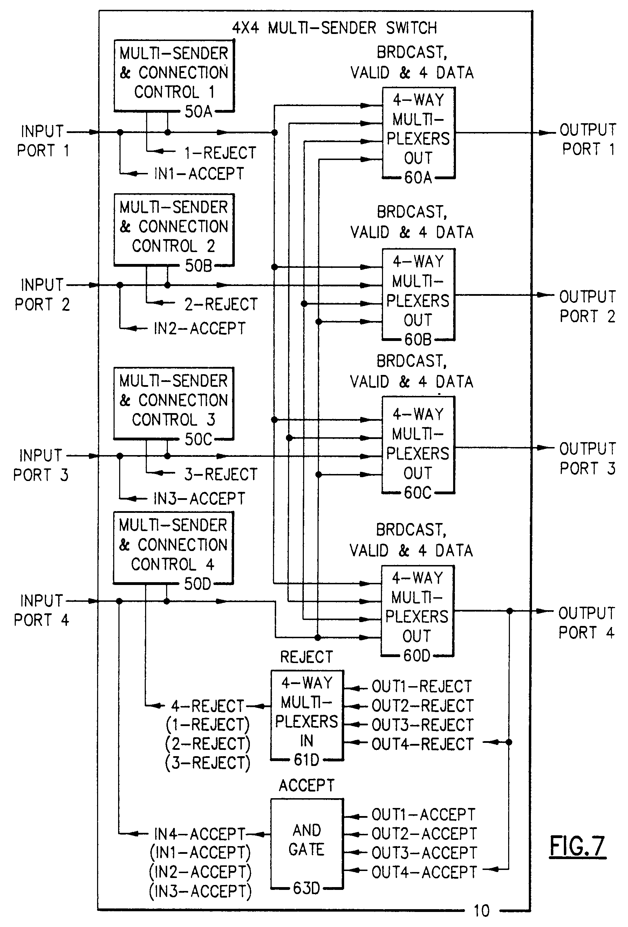

Referring to FIGURE 7, a functional diagram of the simple data flow across multi-sender switching apparatus 10 is illustrated. The BRDCAST, VALID, and four data lines at each input port, inside the multi-sender switch, and at each output port are represented by a single line in FIGURE 7 for simplicity. For instance, the BRDCAST, VALID, and four data lines entering the multi-sender switch 10 at input port 1 go to 5 functional blocks internal to apparatus 10; these are blocks 50A, 60A, 60B, 60C, and 60D. Block 50A makes the decision about which of the 4 possible output ports are to be connected to input port 1. The BRDCAST, VALID, and four data lines from each input port go to each output multiplexer block (60A, 60B, 60C, and 60D). This makes it possible to connect any input port to any output port. Each of the four output multiplexer blocks (60A, 60B, 60C, and 60D) is uniquely commanded from each of the control blocks (50A, 50B, 50C, and 50D) about which of the input port lines are to be gated through to its output port. For instance, control block 50A can command multiplexer 60C to connect input port 1 to output port 3, control block 50B can command multiplexer 60A to connect input port 2 to output port 1, control block 50C can command multiplexers 60B and 60D to connect input port 3 in multi-cast fashion to output ports 2 and 4. All three connections are capable of being established simultaneously or at different times.

At the same time that multiplexers 60A to 60D form connections to move VALID and data signals across the multi-sender switch 10 with a unidirectional signal flow from input port to output port, multiplexer 61D and AND gate 63D (typical implementations are shown by blocks 61D and 63D - similar blocks are associated with each input port) form signal connections for the REJECT and ACCEPT signals, respectively, with a signal flow in the opposite direction of output port to input port. These REJECT and ACCEPT signals provide a positive feedback indication to multi-sender switch 10 of actions taken by later multi-sender switch 10 stages in a cascaded network or by the device receiving and interpreting the BRDCAST, VALID, and 4 data signals. A command or message being transmitted through multi-sender switch apparatus 10 over the four data signals under control of the VALID signal can be REJECTED by any network stage, if it is unable to establish the commanded connection, or by the receiving device if it is not capable of receiving the message currently or if it detects an error in the transmission. The receiving device also has the capability of confirming the arrival of a message correctly (without errors being detected) by pulsing the ACCEPT signal. Since the REJECT and ACCEPT signals go in the opposite direction of the data flow, they provide a means of reporting back a positive indication to the sender on whether the attempted message transmission was received correctly or rejected.

In addition, the multi-sender apparatus 10 includes the capability to establish broadsender and multi-sender connections as controlled by blocks 50a, 50B, 50C, and 50D for each input port, respectively.

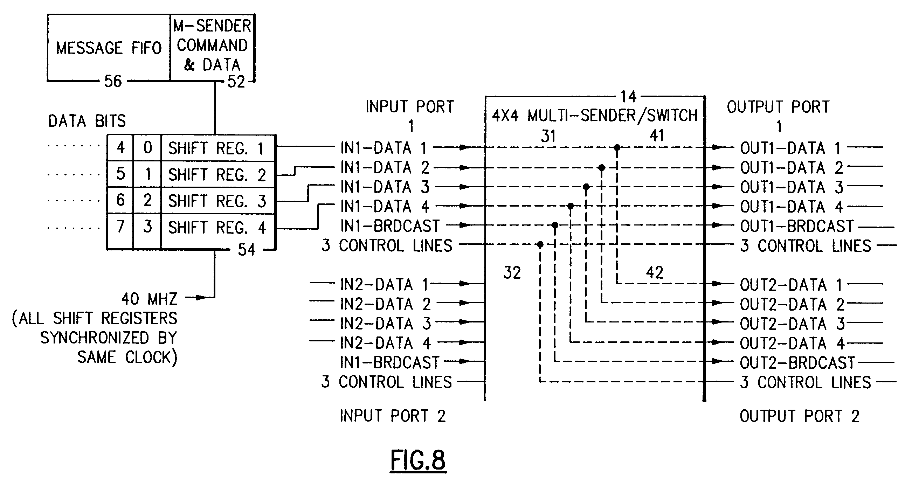

The four input ports to multi-sender switching apparatus 10 each originate at a unique source or node (20, 22, 24, and 26) as shown in FIGURE 1. Referring to FIGURE 8, blocks 56, 52, and 54 illustrate a typical method for generating serial data in the form of network connection commands for each stage of the network followed by any receiving node data. These commands and data are serialized and transmitted to and across the multi-sender switching apparatus 14, which is a partial drawing of the multi-sender switching apparatus 10. Similar serial data generation logic as provided by 56, 52, and 54 can be used at each of the other input ports to the multi-sender switching apparatus 10. Each set of input data lines provides serial data to a given input port which is synchronized to the same clock by the 4 shift registers 54 which create serial data by shifting 4 synchronized lines of data 31 as controlled by the same identical clocking signal (40 MHZ in FIGURE 8). However, the 4 different input port sources (31, 32, 33, and 34) to switching apparatus 14 can be asynchronous to each other, being based on different 40 MHZ clocking signals.

The process for sending serial commands through the multi-sender switching apparatus 14 involves FIFO 56, which accumulates different command sets to be processed and sent to the network one at a time. The next entire command set to be transmitted is moved to buffer 52. The command stored in buffer 52 is moved to shift registers 54 in preparation for transmittal and the data is dispersed across the four shift registers 54 by placing data bit 0 into the first bit of shift register 1, data bit 1 into the first bit of shift register 2, data bit 2 into the first bit of shift register 3, data bit 3 into the first bit of shift register 4, data bit 4 into the second bit of shift register 1, etc. Shift registers 54 then begin to send serial data to multi-sender switching apparatus 14 over 4 synchronized data lines, in such a manner that the serial data flows continuously until the entire command set has been transmitted. The multi-sender switching apparatus 14 uses the first 8 bits transmitted to select and establish a connection path or paths through the multi-sender switching apparatus 14. The example in FIGURE 8 illustrates via dashed lines, the multi-sender switching apparatus establishing a connection between input port 1 (31) and output ports 1 (41) and 2 (42), so each of the eight individual lines in interface 31 are uniquely and directly connected to each of the corresponding lines in interfaces 41 and 42.

The convention for indicating to an input port that there is no transfer in progress is to issue continuous IDLE commands, which are denoted by the 4 data lines, the BRDCAST control line, and the VALID control line being held at logical 0's. The detection of a logical 1 on any of the input lines will signify the departure from the IDLE state and indicate to the multi-sender switching apparatus 10 that a selection and transfer is beginning. Likewise, the output lines from the multi-sender switching apparatus 10 will be held in the IDLE state (at all 0's) when there is no transfer occurring.

The multi-sender switching apparatus 10 receives information about which connection or connections to establish from the four data lines coming into each input port. The multi-sender switching apparatus 10 connections are established first, and then the data can flow to the selected destination or destinations. The selection information need NOT identify an input port number (1 to 4) because it is arriving at the multi-sender switch apparatus 10 over a specific input and the apparatus already knows on what input number it is receiving data. Therefore, the selection information need ONLY specify the number (1 to 4) of which of the four output ports to make the connection. The method of path selection used is a direct correlation between the four input data lines and the output port which is selected. In addition, there must be a return to zero (called a DEAD FIELD) of the data lines after each path selection is made at each stage of the network.

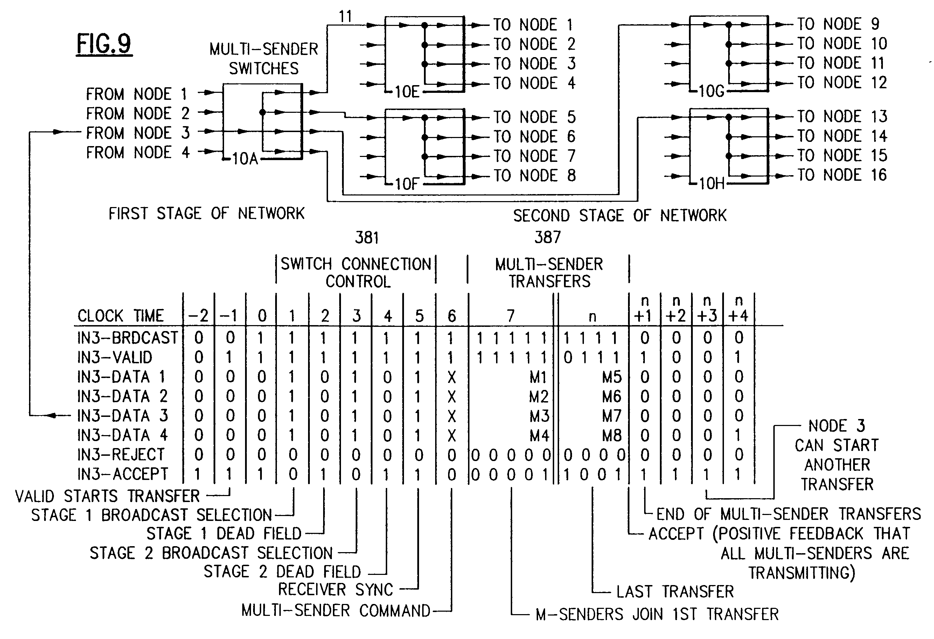

Referring to FIGURE 9, a typical broadcast example used to start a broadsender operation and the exact serial bit patterns and control signal activation is shown for sending control and data information to multi-sender switching apparatus 10. The example references the cascaded, two stage network shown in FIGURE 4 and begins by sending data across the network from node 3 through multi-sender switching apparatuses 10A, 10E, 10F, 10G, and 10H to all nodes, as shown in FIGURE 9, to eventually establish the broadsender and broadcast connections shown in FIGURE 5. To establish a single-sender broadcast as the first step of the multi-sender operation, input port 3 begins by making connections to all the output ports of the first stage multi-sender switching apparatus 10A, and input port 3 must also be connected to all the output ports of the second stage multi-sender switching apparatuses 10E, 10F, 10G, and 10H. The signal sequence that is sent to input port 3 to cause the desired connections in multi-sender switching apparatuses 10A, 10E, 10F, 10G, and 10H is shown in FIGURE 9. In the signal sequence of 1's and 0's, time advances from left to right so that the values seen at clock time -2 arrive at multi-sender switch 10A first, and the values at clock time -1 arrive second, etc. Initially, the values of the IN3-DATA, IN3-BRDCAST, and IN3-VALID lines are all zeroes and cause nothing to happen at multi-sender switch 10A during time -2 because they indicate IDLE. At clock time -1, the IN3-VALID line goes to a logical 1. This prepares multi-sender switch 10A by enabling the input port 3 to receive a transfer from node 3, but no connection or action takes place at multi-sender switch 10A at this time. At clock time 0, the IN3-BRDCAST line goes to a logical 1. This further prepares multi-sender switch 10A by enabling the input port 3 to perform a broadcast or multi-cast operation, but no connection or action takes place at multi-sender switch 10A at this time. Finally, at clock time 1, multi-sender switch 10A receives its command as to what output port or ports to connect to; the command is received entirely during clock time 1.

The command bit pattern sent at clock time 1 is used to establish connection to the commanded nodes during time interval 381; this process is called a path selection operation and takes place completely internal to the multi-sender switches. The path selection approach carried out by the present invention is to let each of the four IN3-DATA lines define a unique output of multi-sender switch 10A to be selected. For instance, IN3-DATA1 signal going to a logical 1 at time 1 tells multi-sender switch 10A to connect input port 3 to output port 1, IN3-DATA2 commands connection to output port 2, etc. In our example, since all four IN3-DATA lines go to logical 1's during clock time 1, multi-sender switch 10A is thereby commanded to connect simultaneously input port 3 to all four output ports. The multi-sender switch 10A makes the commanded connection by removing the 4 bits from the data lines and storing them in a selection register in control block 50C of FIGURE 7. The bits transmitted during clock time 1 are not passed through multi-sender switch 10A to the next network stage, but instead multi-sender switch 10A begins passing the very next 4 bits of data corresponding to clock time 2 to the next stage. However, the information bits following a selection command (those transmitted by the four data lines at clock time 2 in our example) must always be all zeroes (a DEAD FIELD) as shown in FIGURE 9. The purpose of this will be explained shortly.

At clock time 2, the connection of multi-sender switch 10A input port 3 to all four output ports is established and causes the signal sequence at clock time 2 to be transmitted across multi-sender switch 10A and the interconnecting wires 11 to input port 1 of multi-sender switches 10E, 10F, 10G, and 10H, respectively. From this time on, multi-sender switch 10A transmits all later input port 3 data immediately and simultaneously to the four second stage multi-sender switches; it never examines or takes any action on any other data patterns arriving over its input lines. Thus, at clock time 2, assuming zero delay across switch 10A and its associated cable, input port 1 at all four second stage switches see the BRDCAST and VALID signals rise and the all zeroes DEAD FIELD on the four data lines coming from the interconnecting wires 11. At time 3, all four second stage multi-sender switches simultaneously receive the second stage selection command being transmitted from node 3, which commands them to connect their input port 1 to all four output ports based on the data pattern present on the IN-DATA lines during time 3. The second stages all make connections during time 3 in an identical manner to the way multi-sender switch 10A did previously at time 1.

Likewise, the second stage multi-sender switches in making the commanded broadcast connections remove the 4 bits at clock time 3 from the IN-DATA lines, and stores them in the selection register which is part of control block 50A of FIGURE 7. The bits transmitted during clock time 3 are not passed through the second stage multi-sender switches, but instead the very next 4 bits of data corresponding to clock time 4 are passed through simultaneously to all sixteen nodes in broadcast fashion. However, the information bits following a selection command (those transmitted by the 4 data lines at clock time 4 in our example) must always be all zeroes (a DEAD FIELD) as shown in FIGURE 9. Thus, by clock time 4, multi-sender switches 10A, 10E, 10F, 10G and 10H have established a connection path for transferring data directly from Node 3 to all sixteen nodes during time interval 387. Up to clock time 5, the 16 receiving nodes see nothing but IDLE commands. From time 5 on, all sixteen receiving nodes can receive data from Node 3 over the 4 corresponding IN-DATA lines coming from the second stage multi-sender switches. The protocol of the actual multi-sender command starts with an all ones synchronization field at time 5, followed by a multi-sender command at time 6. The multi-sender command can be supplemented by additional 4 bit serial transfers arriving at time 7 as shown in the example, when necessary to further define the multi-sender command to all receiving nodes by using more bits of command data. The purpose of the synchronization field of all ones as a prefix to the actual multi-sender command data is to enable the receiving nodes to synchronize to the data coming from sending node 3. This assumes that the nodes involved in the data transfer have clocking systems that are asynchronous to each other but are operating at the same frequency within a specified tolerance.

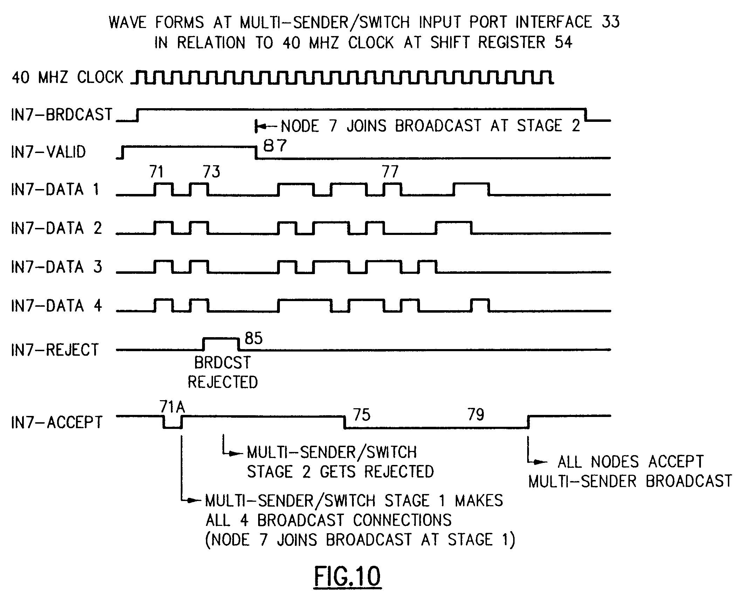

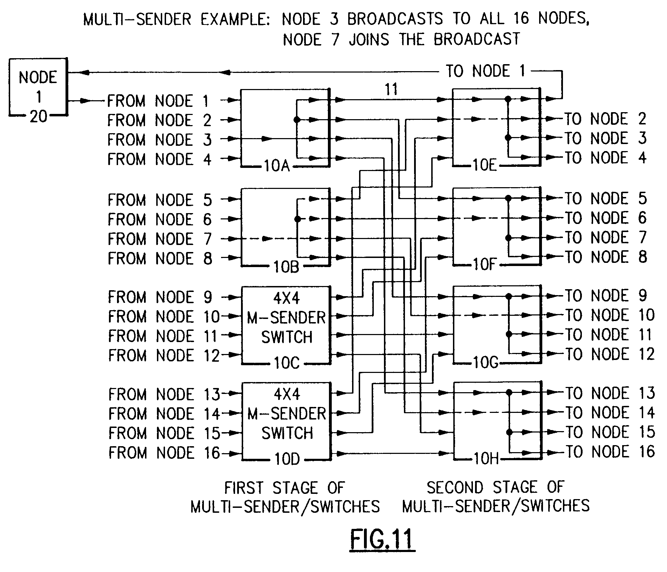

Each receiving node decodes the command bits received in time 6,7, etc. and determines that a multi-sender operation has been started. It is the responsibility of each receiving node that decodes the multi-sender command to take immediate action to JOIN into the initial broadcast, multi-cast or transfer in progress, and convert the single sender operation into a multi-sender operation. Referring to FIGURE 10, the timing is shown for node 7 JOINing the broadcast operation started by node 3 in FIGURE 9 and making it into a multi-sender operation. Note that node 7 is attached and supplies selection information and data to multi-sender switch 10B as shown in FIGURE 11, which has been unaffected by the broadcast operation in progress from node 3; i. e., multi-sender switch 10B is IDLE at time 7 of FIGURE 9. For node 7 to fully JOIN the broadcast, it must initiate a new transfer from node 7 including the path selection pattern of all ones data as shown by 71 in FIGURE 10. Since multi-sender switch 10B is completely idle when node 7 transmits its broadcast selection pattern of all ones (71), it will respond immediately by connecting the node 7 input port simultaneously to all four output ports of multi-sender switch 10B in the broadcast fashion. Multi-sender/switch 10B sends a positive acknowledgement (71A) back to node 7 over the ACCEPT interface line to indicate that the first stage of the network has established the commanded broadcast or multi-cast connections. Then, node 7 sends the second all ones pattern (73) to connect the second stage switches 10E, 10F, 10G, and 10H into the broadcast operation. However, the second stage switches already have a broadcast operation in progress as shown by Fig.11. Since any multi-sender switch 10 is only capable of supporting one broadcast or multi-cast operation at a time, the second stage multi-sender switches will all reject the attempt by node 7 to establish a second broadcast. The Reject is reported back to node 7 and shown by pulse 85 of FIGURE 10. When node 7 sees the Reject line go active, it knows that it has established unique broadcast or multi-cast connections into the network as far as it can go. Node 7, after getting rejected, then knows that it must both maintain the unique broadcast connections that it has established at stage 1, and it must JOIN the broadcasts already established in other stages. Node 7 accomplishes this by leaving the IN7-BRDCAST line active and resetting the IN7-VALID and the four IN7-DATA lines to zeroes as shown by 87 in FIGURE 10. The IN7-BRDCAST line staying active to the first stage multi-sender switch causes it to maintain the output port connections as shown by the dashed lines in block 10B of FIGURE 11 that were established earlier by pulses 71. At the same time, the stage 2 switches will see the IN-VALID interface line drop and the IN-BRDCAST line stay active and detect this a as JOIN command; i.e., the multi-sender switches decode this condition of the IN-VALID and IN-BRDCAST lines to mean JOIN. Multi-sender/switches 10E, 10F, 10G, and 10H detect the JOIN command being issued over their respective input port 2 lines, and they all connect input port 2 into to broadcast operation as shown by the dashed lines in blocks 10E, 10F, 10G, and 10H of FIGURE 11. This completes the JOIN operation for Node 7, and it raises its ACCEPT interface signal 79 to let all nodes know that it has successfully JOINed into the multi-sender operation.

In like fashion, any node can JOIN an operation to make it a multi-sender operation. For our example, all sixteen nodes would JOIN the original node 3 broadcast to convert the operation into a broadsender and broadcast operation. Each node would JOIN the operation in the same manner and with timing similar to that used by node 7 in Figures 9 and 10. However, some nodes will get a slightly different response than that shown by FIGURE 10. Only those nodes commanding connections be made at IDLE multi-sender switches will get the 71A response of being ACCEPTed. Any node trying to start a broadcast at a multi-sender switch that already has a broadcast or multi-cast operation in progress will get the reject 85 sequence immediately (even from stage 1). However, the sending node's response is the same - it leaves the IN-BRDCAST line active and resets the IN-VALID and the four IN-DATA lines to zeroes as shown by 87 in FIGURE 10. Any multi-sender switches receiving this condition of the IN-VALID and IN-BRDCAST lines detect the JOIN command, which will cause them to JOIN any broadcast or multi-cast connections in progress internal to that particular network stage and to pass the JOIN configuration of the IN-VALID and IN-BRDCAST lines to any following network stage. Thus, every multi-sender switch that detects the JOIN command presented to any input port causes that input port to JOIN into the broadcast or multi-cast connection already established at that multisender switch, and also causes the JOIN command to ripple thru the network until that input port is JOINed and is actively sending data to all the commanded receiving nodes. Each node after issuing and maintaining the JOIN command, issues a positive acknowledge on its ACCEPT signal 79 to show that it has successfully JOINed the operation in progress.

Referring again to FIGURE 9, during time 7 all receiving nodes that are commanded by the multi-sender command transmitted from node 3 at times 6 and 7,individually perform the transfer operations shown in FIGURE 10 and JOIN into the operation. Time 7 is held until all nodes have JOINed the broadcast or multi-cast operation as shown by FIGURE 5, and have so indicated by issuing a positive acknowledgement over the ACCEPT signal. The multi-sender switches of the network shown in FIGURE 4, all work together to provide one consistent ACCEPT signal back through all the stages of the network to the sending nodes. In our example, the second stage multi-sender switches past the ACCEPT indication back to the first stage multi-sender switches, which in turn returns it to the multi-sender nodes. Each multi-sender switch 10 logically "ANDS" all the ACCEPT signals it receives from its four output ports as shown by AND gate 63D of FIGURE 7. This ANDing of the ACCEPT signals requires an active ACCEPT signal from all receiving nodes attached to the output ports of multi-sender switches 10E, 10F, 10G, and 10H before an ACCEPT signal is sent to the previous multi-sender switch stage or to the multi-sender nodes. When Node 3 (the originating node) sees the ACCEPT signal go active, it gets a positive feedback indication that all multi-sender nodes have JOINed the operation that Node 3 started.

At this point Node 3 is the only node that is actively driving both IN-VALID and IN-BRDCAST, since all the JOINing nodes drive IN-BRDCAST only. Thus, Node 3 remains in charge of the operation it started by having control of the IN-VALID signal. Node 3 can step multi-sender operations in synchronization with itself by pulsing the IN-VALID signal to zero as shown in time 'n' of FIGURE 9. When all the multi-sender nodes detect IN-VALID go to zero, they increment to the next time step of the operation. Going to the next step means that each multi-sender now drives a new parameter onto the IN-DATA lines of the network, such as M5, M6, M7, and M8. These parameters are again logically ORed by the network as shown in FIGURE 2, and generate a composite value on the network OUT-DATA lines that is broadcast to all receiving nodes simultaneously. Again each multi-sending node signifies that it has received data from the network by activating its individual ACCEPT line which gets ANDed through the network to report the composite ACCEPT to node 3 (in our example) which can again pulse IN-VALID and cause the multi-senders to step to the next parameter. This process repeats until node 3 detects the end of the operation and terminates it by dropping both its IN-BRDCAST and IN-VALID lines. All multi-senders detect the IN-VALID line dropping for more than 2 clock times. They realize that the transfer is complete, and they individually drop their IN-BRDCAST lines to remove the JOIN commands and to return to the IDLE state. When any node detects that the incoming BRDCAST and VALID signals have gone to zeroes, it is free to begin a new transmission of any type starting at time n + 4 as shown in FIGURE 9.

Node 3 has the capability of terminating a data transfer at any time by resetting its IN3-BRDCAST and IN3-VALID and four data lines to zeroes, indicating a return to the IDLE state. This will immediately break all network connections in both stages, and signify to all nodes that the transfer has been terminated by a return to the IDLE state.

If any node detects an error or cannot respond to a multi-sender command, it responds by not asserting its ACCEPT interface line back to the corresponding second stage multi-senders witch 10E, 10F, 10G, or 10H; i.e., it drives its ACCEPT line to a zero rather than to a logical 1. The ACCEPT signal generated by any of the second stage multi-sender switches, as typically shown by AND gate 63D in FIGURE 7, causes a zero on the ACCEPT line to ripple back to multi-sender switch 10A and any other active first stage multi-sender switch due to a zero on the input of AND gate 63D in the second stage. Likewise, AND gate 63D in any active first stage multi-sender switch passes a logical zero back on its IN-ACCEPT line to the sending nodes. Node 3, the controlling node, allows a short time period for all the nodes to respond with an ACCEPT to the multi-sender transmission. It times-out after that if it has not received an ACCEPT indication. Node 3 then notes that the transfer was not ACCEPTED by all nodes and returns to the IDLE state by resetting its IN3-BRDCAST and IN3-VALID lines to zeroes. Node 3 can then retry the multi-sender operation several more times until a specified number of retries is surpassed, or other diagnostic procedures may be invoked to isolate a failing node or switch and remove it from the network.

Multi-sender and multi-cast operations function identically to the broadsender and broadcast operations described above except that a subset of sending and receiving nodes is used rather than all nodes.

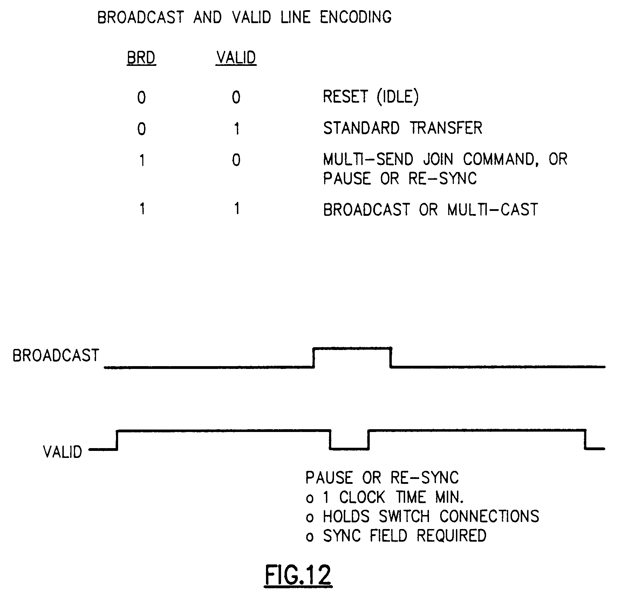

Referring to FIGURE 12, several additional functions become available to the multi-sender switch 10 based on the decoding of the IN-BRDCAST and IN-VALID lines at any input port. When both lines are zeroes, the multi-sender switch 10 is commanded to reset and enter the IDLE state. When the IN-BRDCAST line is a zero and the IN-VALID line is a one, standard point to point (single-sender to single receiver) transfers are enabled. When the IN-BRDCAST line is a one and the IN-VALID line is a zero, the JOIN command is enabled which allows multiple senders to JOIN and participate in transfers that are already in progress as described for the present invention. A second function of the same decode is to enable the PAUSE and RE-SYNC function as shown in FIGURE 12. If the sending node cannot continuously supply data, the PAUSE and RE-SYNC function allows it to temporarily stop sending valid data and to resume when the data becomes available. The pausing node executes this function by raising the IN-BRDCAST line and then dropping the IN-VALID line. The multi-sender switch 10 of the first stage ripples the PAUSE indication through to the second network stage and to the receiving node or nodes by using the same decode of BRDCAST (at 1) and VALID (at zero). The presence of either BRDCAST or VALID at the multi-sender switch 10 prevents it from going IDLE and causes the multi-sender switch to maintain the active connection even though no valid data is transmitted during the PAUSE operation. At the receiving node or nodes, VALID going inactive stops the flow of valid data. The data flow is resumed when the sending node raises VALID again, resends the sync field (as shown during time 5 of FIGURE 9), continues the serial data flow, and later drops the BRDCAST line to complete the PAUSE and RE-SYNC operation. The purpose of transmitting the receiver sync field first is to identify the restart of the data flow and to enable the sending and receiving node asynchronous clocking systems to re-establish synchronization. Note that this method of communication between two nodes which have asynchronous clocks can eventually lose synchronization for long data transfers. The PAUSE and RE-SYNC feature of the multi-sender switch 10 network allows the accurate transmission of longer messages by allowing the sending node to resynchronize with the receiving node at fixed intervals during the transmission. This, then, becomes a second function of the PAUSE and RE-SYNC operation. The fourth decode occurs when the IN-BRDCAST line is a one and the IN-VALID line is a one, which defines the enabling of a single sender broadcast or multi-cast transfer.

Referring to FIGURE 10, the ACCEPT signal is shown having a default state of one and performing two distinct functions. The rise of the first negative pulse on IN7-ACCEPT after a short time duration indicates that all four output ports were immediately available and that connection to them was made successfully. When the sending node sees the ACCEPT line rise (71A), it places the connection command 73 for the next network stage on the IN7-DATA lines. The ACCEPT pulse can ripple back across multiple stages in the network to report to the sending node a successful connection at any stage in the network. The second ACCEPT line function occurs after each selected receiving node begins to receive its first multi-sender command. Now it drives its ACCEPT interface line to a zero. This ripples back through the network in normal fashion so the sending node sees the ACCEPT line go to zero. After each multi-sender node JOINS the operation, it raises the ACCEPT line again to show that it has successfully joined the multi-sender operation. Likewise, each individual multi-sender uses the ACCEPT signal to perform handshaking for each individual transfer with the controlling node. Each multi-sending node drives the ACCEPT line to zero at the beginning of each transfer and raises it to a one when it has driven data onto the network.

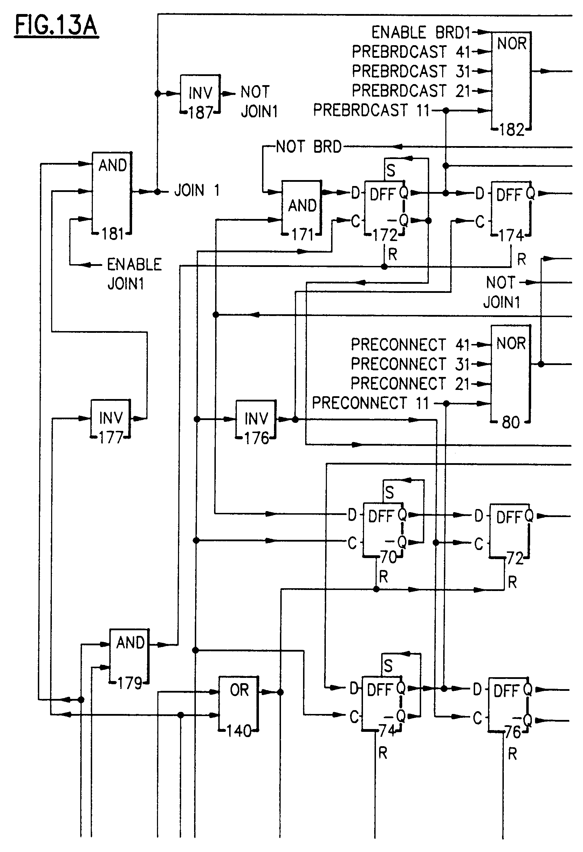

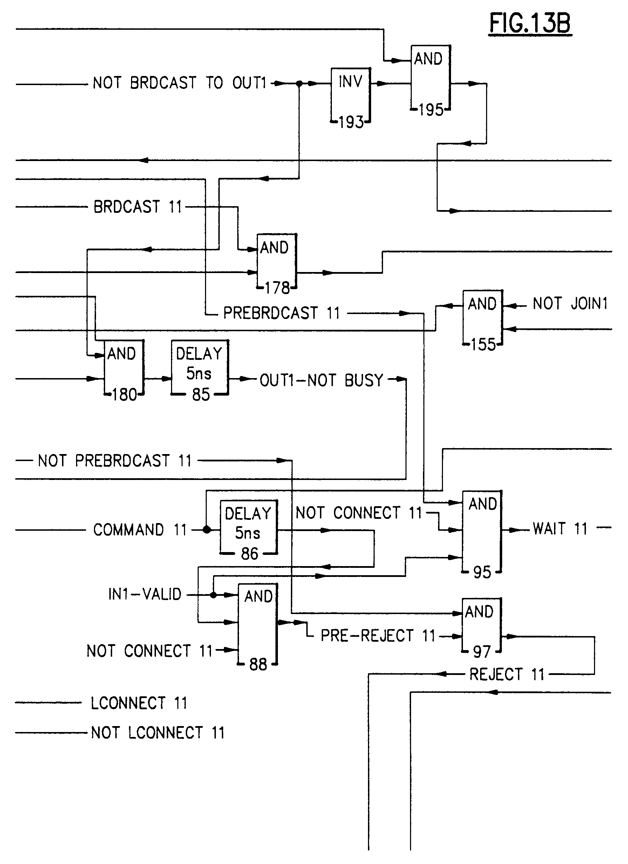

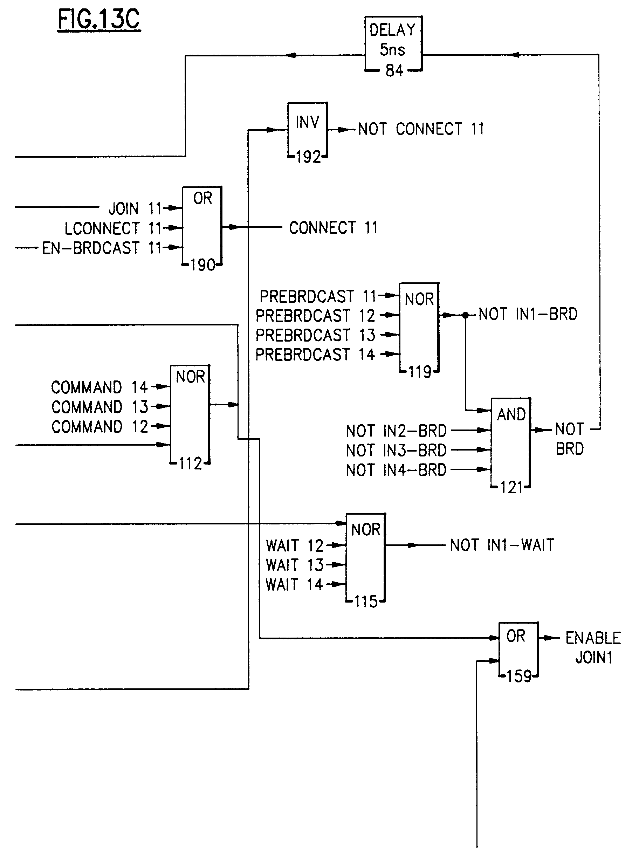

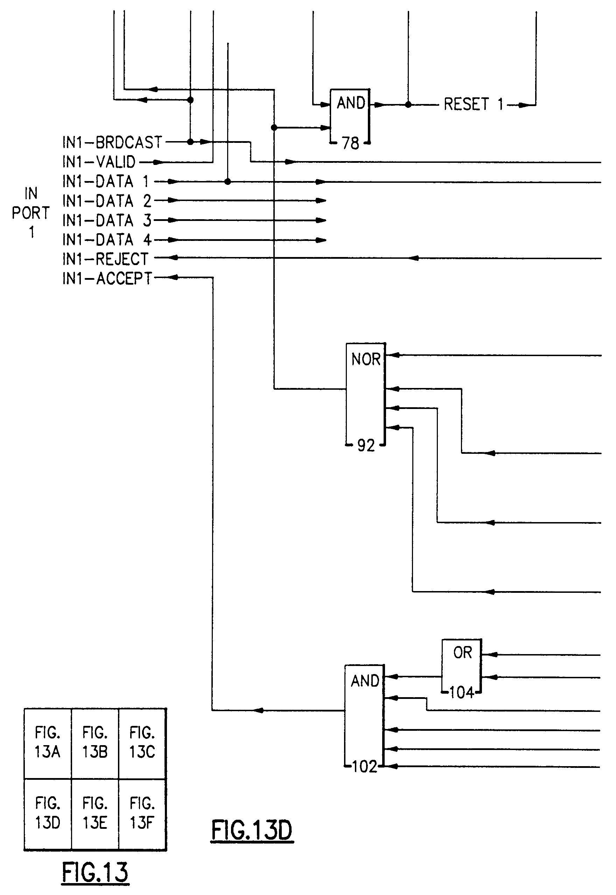

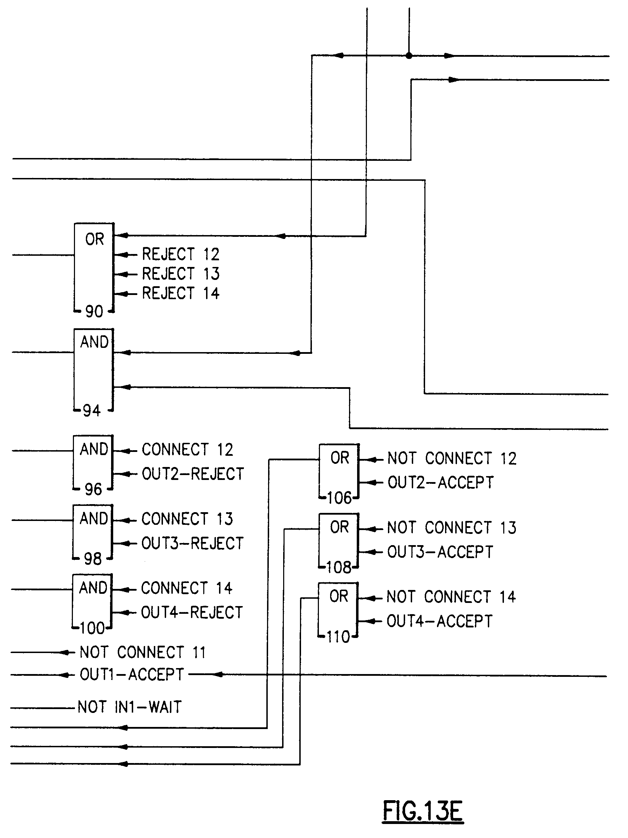

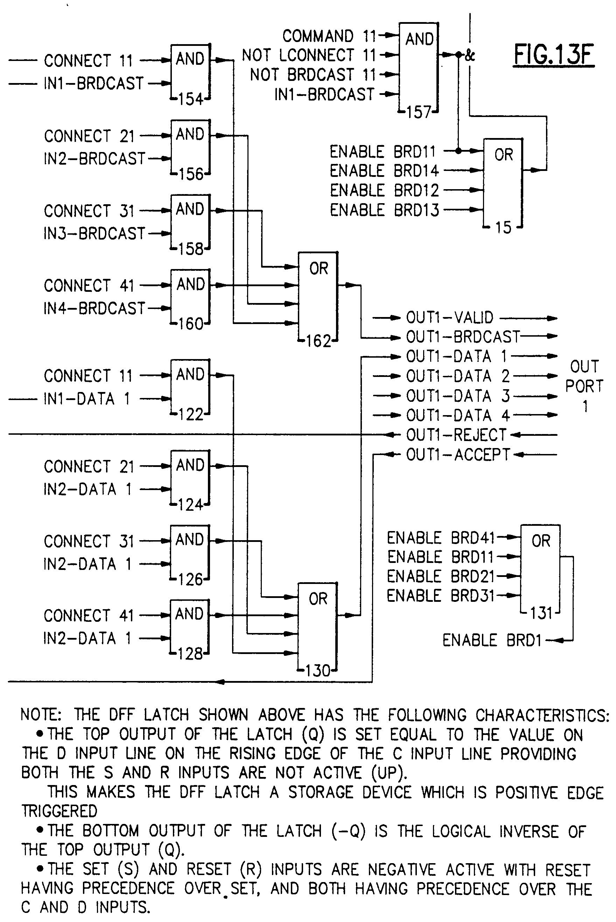

Referring to FIGURE 13, the detailed logic implementation of a portion of the invention multi-sender switch 10 is shown. This detailed view shows the logic required to establish and hold a standard point to point, broadcast/multi-cast, or multi-sender connection at input port 1 and output port 1. This portion contains typical implementations of all the major functional blocks of the multi-sender switch 10, and these functional blocks are replicated to form the entire multi-sender switch 10. The details of making multi-sender/multi-cast connections are described in the present invention. For details of making standard point to point connections, see IBM Docket 9-88-078, and for details of making broadcast and multi-cast connections, see IBM Docket 9-91-030.

The major function of control block 50A of FIGURE 7, which controls the path selection function of multi-sender switch 10, is implemented by 6 control DFF latches 70, 72, 74, 76, 172, and 174. IN1-BRDCAST logically ORed with IN1-VALID in gate 140 creates a reset input to these 6 latches. When both IN1-VALID and IN1-BRDCAST are logical 0's, the 6 latches are all reset. OR gate 140 is wired directly to the R (reset) input of latches 70 and 72, and indirectly (first going through AND gate 78) to the other 4 latches. When either or both IN1-BRDCAST or IN1-VALID goes to a logical 1, the 6 latches become enabled so that they are then capable of being set - but they do not get set at this time. It is the OR function provided by gate 140 that keeps the 6 latches from resetting during a PAUSE and RE-SYNC operation as shown in Fig.10, and causes the six latches (and therefore the multi-sender switch 10) to maintain the connections through the PAUSE and RE-SYNC operation. The multi-sender operation starts with a single sender broadcast or multi-cast operation as shown in FIGURE 9, which occurs as follows. Latches 70, 74 and 172 are set simultaneously when IN1-DATA1 rises after IN1-VALID and/or IN1-BRDCAST, if the multi-sender switch 10 is not previously busy. The IN1-DATA1 line going active is interpreted by multi-sender switch 10 as a connection command to connect input port 1 to output port 1. IN1-DATA1 is routed directly to the C (clock) input of latches 70, 74, and 172 and causes them to set if the associated D (data) input is a logical 1. Latch 70 data input coming from NOR gate 112 through AND gate 155 will always be a logical 1 when the first data line to rise after IN1-VALID is IN1-DATA1. Thus when switch 10 receives a command to connect input port 1 to output port 1, latch 70 will always set. Latch 70 will set regardless of whether BUSY or CONTENTION conditions exist for output port 1. This is not true for latch 74, which will not set if output port 1 is previously BUSY as shown by NOR gate 80 through gate 180 and delay 85 to the data input of latch 74. Similarly, latch 172 will not be set if a previous broadcast is active in the switch (BROADCAST BUSY) as indicated by NOR gate 119 through AND gates 121 and 171 to the data input of latch 172. The feedback of the -Q output signals from latches 70, 74, and 172 to their respective S (set) inputs keeps the latches set after they have been initially set by the C and D inputs. Thus, once set, latches 70 74, and 172 will remain set until a reset is signaled; i.e., the waveforms on the C and D inputs will have no further affect on the state of these 3 latches.

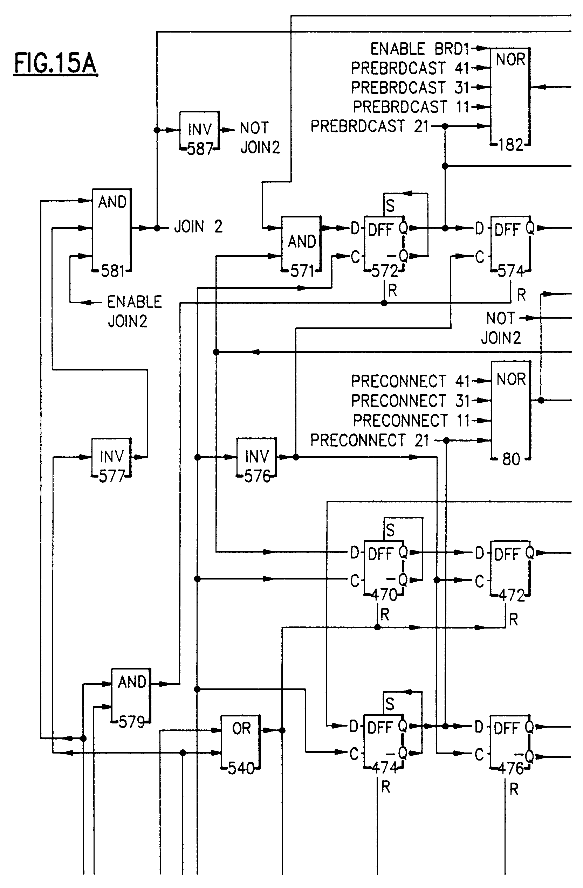

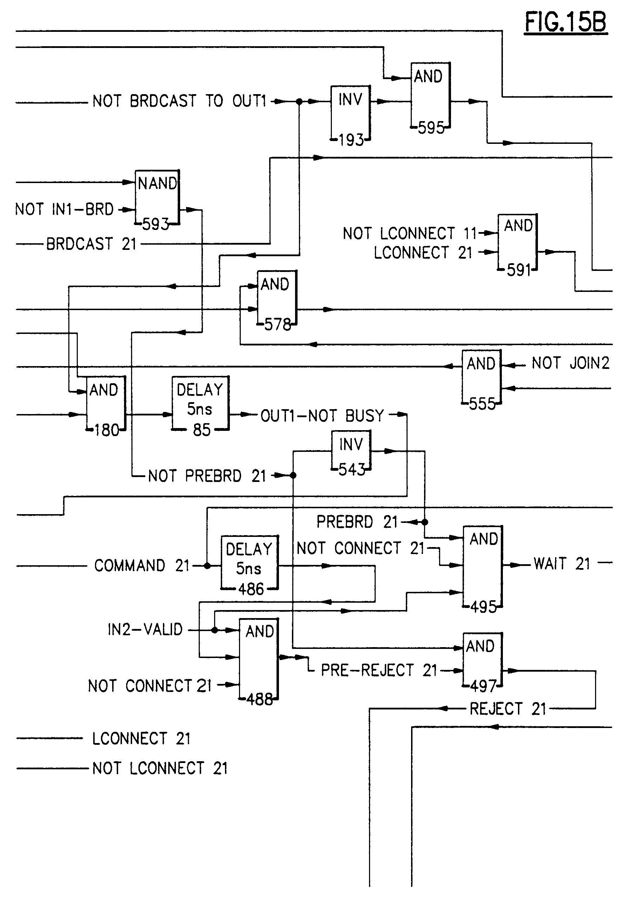

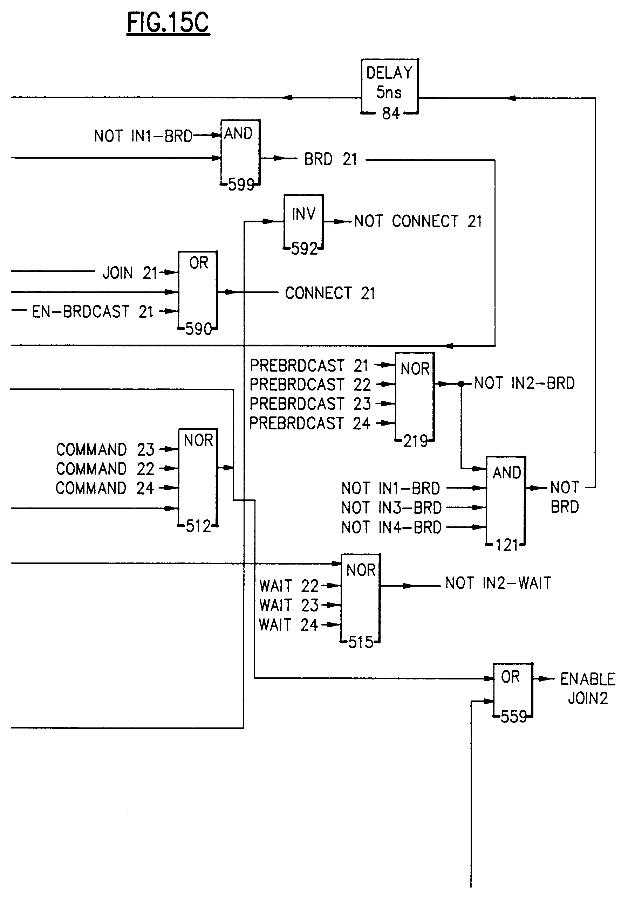

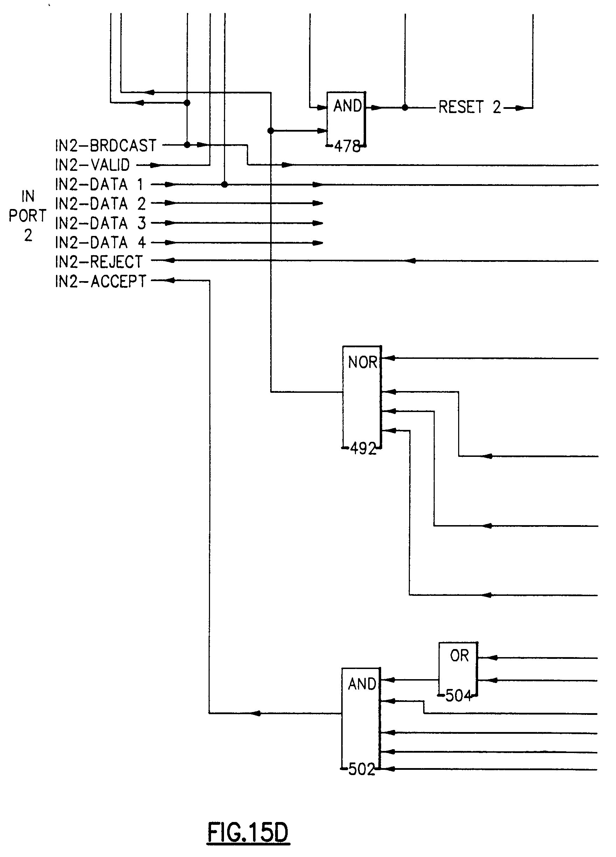

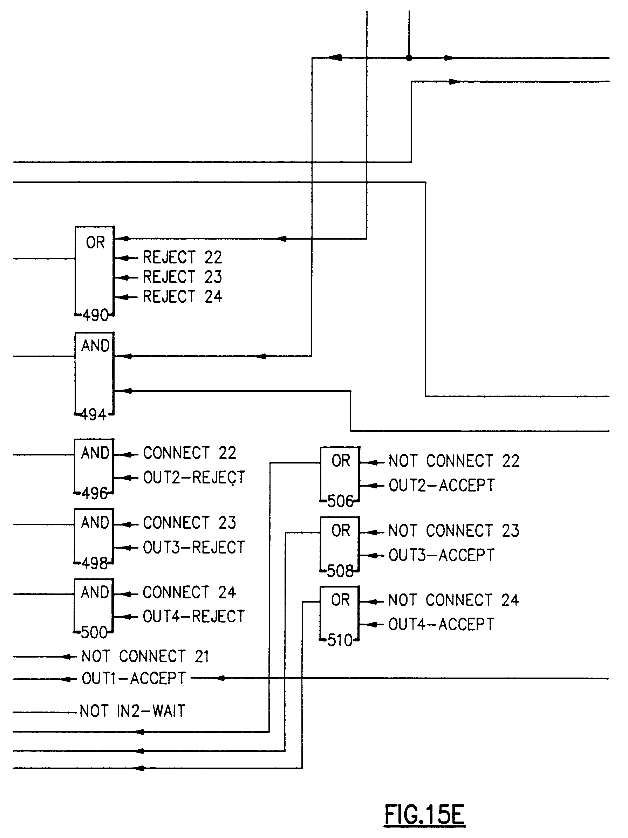

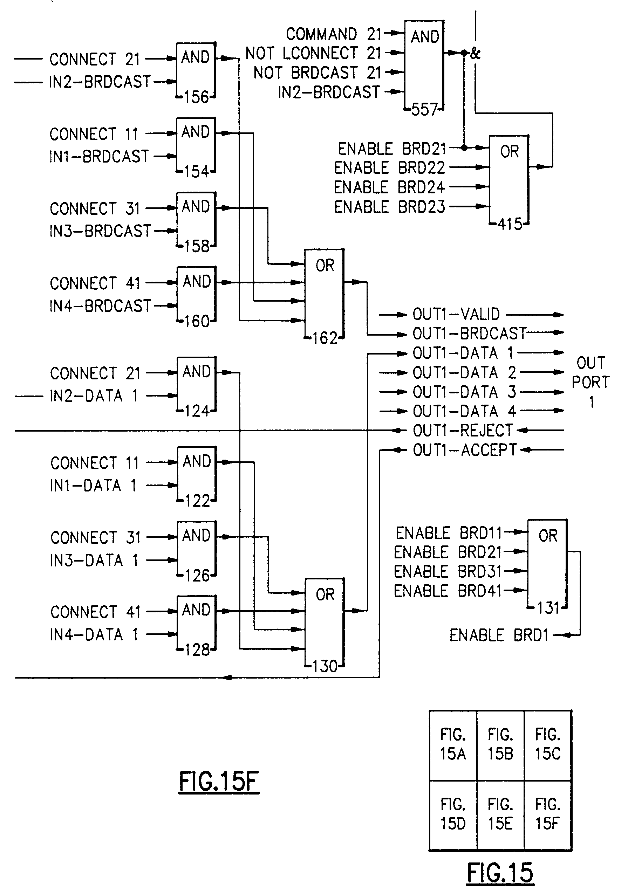

Gate 176 inverts the IN1-DATA1 signal and sends it to the C inputs of latches 72, 76, and 174. Since the D inputs connect to the Q outputs of latches 70, 74, and 172, respectively, latches 72, 76, and 174 assume the values of latches 70, 74 and 172, respectively, but not until IN1-DATA1 falls (at the beginning of the following DEAD FIELD). At this time latch 72 records and holds the fact that COMMAND 11 has been issued; i.e., that a command has been issued to connect input port 1 to output port 1 (denoted by 11) -this latch can set either for a standard or broadcast/multi-cast operation. Latch 76 performs the actual connection of 11 (if output port 1 is NOT BUSY) by setting its Q output indicating LCONNECT 11 -this latch can set either for a standard or broadcast/multi-cast operation; or latch 76 indicates that it cannot make the connection because output port 1 is BUSY by activating its -Q output of -LCONNECT 11. Latch 174 records whether the present operation is a broadcast/multi-cast operation and if it is the first such operation to become active within the multi-sender switch. If operation gates 119 and 121 indicate that no broadcast/multi-cast operation is active or pending, latches 172 and 174 will both set winning the right for input port 1 to be the one broadcast/multi-cast operation allowed within the switch. BRDCAST 11 signal from latch 174 being set proclaims that the present broadcast honors for the multi-sender switch have been won by input port 1. Latch 174's not being set means that the present operation is not a broadcast or multi-cast or that input port 1 has encountered a BROADCAST BUSY condition and will be REJECTED. Latches 172 and 174 will only become used for broadcast/multi-cast operations. The output of latch 172 goes to NOR gate 119 and AND gate 121 to cause the NOT BRD to go to zero and prevent the setting of any other latches similar to latch 172 within the multi-sender switch (such as latch 572 in FIGURE 15).

The CONNECT 11 signal of OR gate 190, when active, is used to establish the direct connection of 6 interface lines between input port 1 and output port 1. The four data lines of input port 1 become connected to the four data lines of output port 1 through multiplexers 60A shown in FIGURE 6. The details of a typical connection are shown by AND gate 122 and OR gate 130: CONNECT 11 active at AND gate 122 causes the output of AND gate 122 to follow directly the values on IN1-DATA1 which is gated through OR gate 130 to OUT1-DATA1. Note that the connection (CONNECT 11) caused by the setting of latch 76 (LCONNECT 11) through OR gate 190 is made during the DEAD FIELD time after to the connection command; this is what causes the path selection command not to be forwarded to output port 1. Instead, it is stripped from the serial data being passed through multi-sender switch 10 and held in latches like 72, 76, and 174.

Similarly, CONNECT 11 causes two other control signals to be connected between input port 1 and output port 1 -the IN1-BRDCAST and IN1-VALID signals. A representative connection for these two signals is shown by gates 154 and 162. CONNECT 11 active at AND gate 154 causes the output of AND gate 154 to follow directly the values on IN1-BRDCAST which is gated through OR gate 162 to OUT1-BRDCAST.

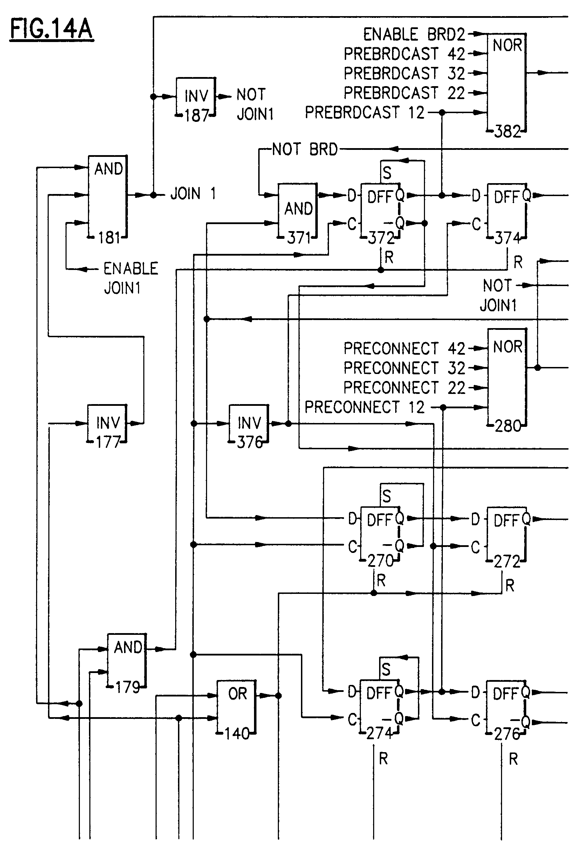

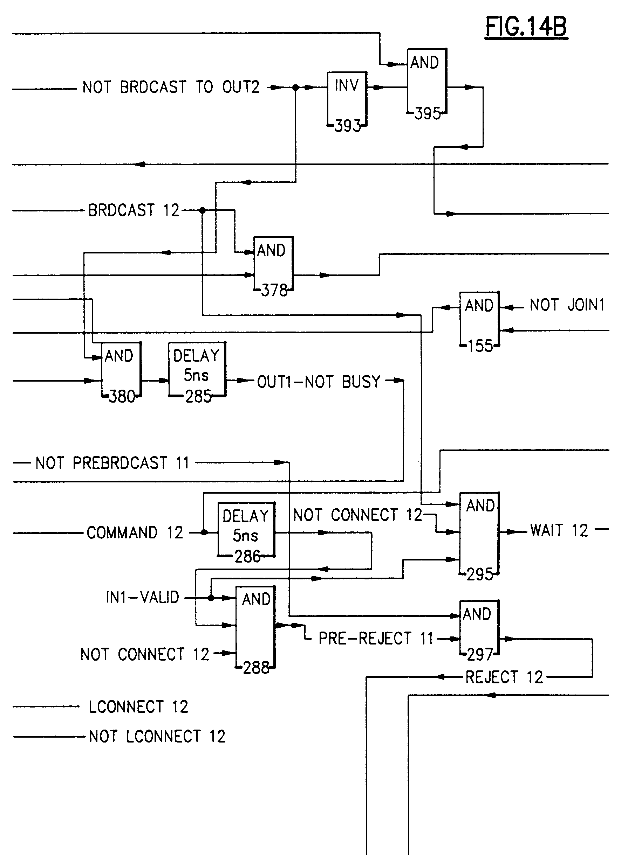

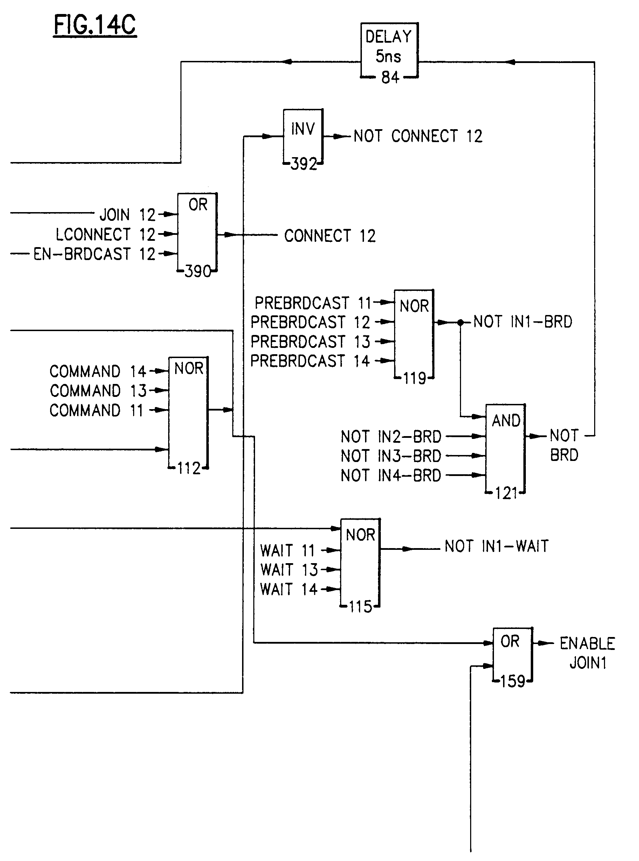

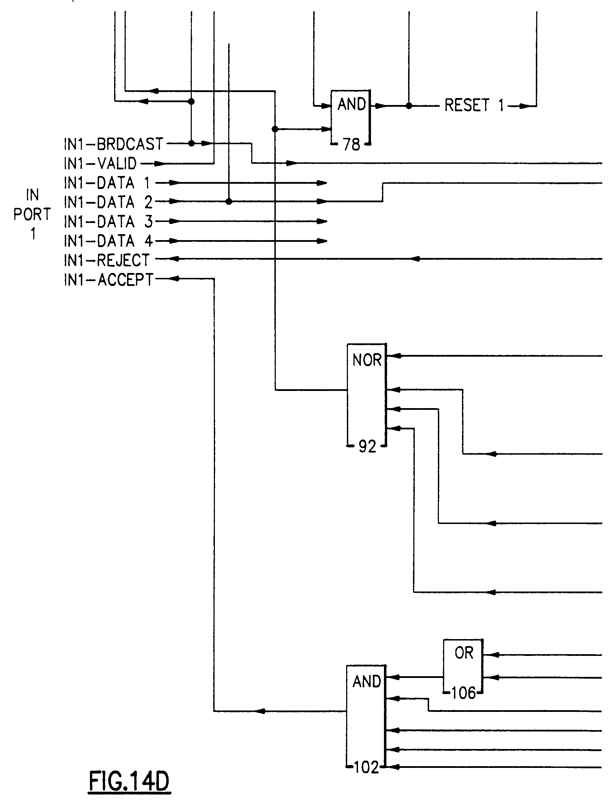

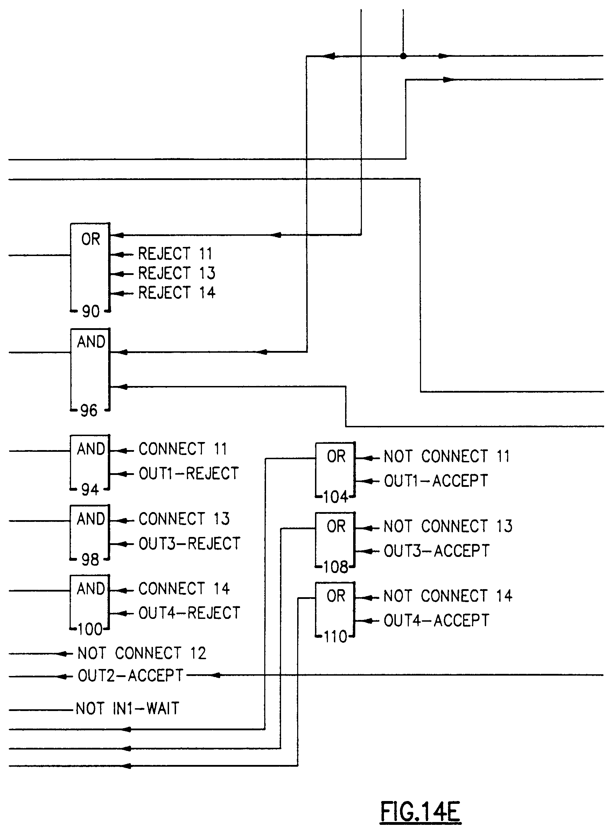

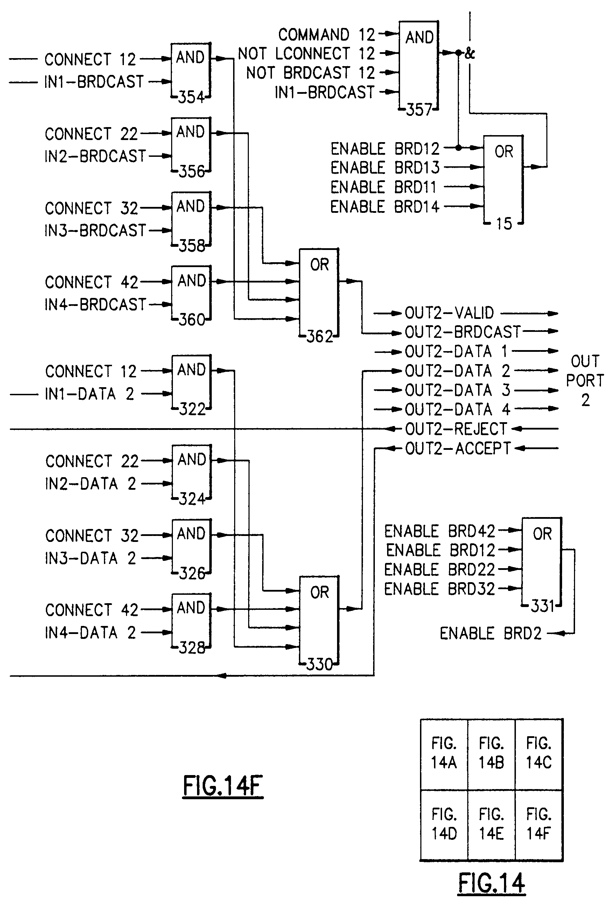

For a broadcast or multi-cast operation, it is possible for input port 1 to be commanded to connect to multiple output ports such that any combination of signals CONNECT 11, CONNECT 12 (shown in FIGURE 14), CONNECT 13, or CONNECT 14 can be active simultaneously. This causes the connection of two interface signals having the opposite direction of flow from the data lines, the REJECT and ACCEPT signals, to be handled differently. Gate 94 shows CONNECT 11 selecting OUT1-REJECT as the source of an internal REJECT signal generated by NOR gate 92. In the case of broadcast or multi-cast, AND gates 96, 98, and 100 can also be active connecting input port 1 to multiple output ports simultaneously, so that a REJECT coming into any output will be combined by NOR gate 92 to produce a composite internal REJECT signal. Thus, if a broadcast/multi-cast operation gets REJECTED from any output port that it has a commanded connection to, NOR gate 92 will go to a zero and cause latches 70, 72, 172, and 174 to be reset through AND gate 78. The OUT-ACCEPT signals coming from all four output ports come into gates 104, 106, 108, and 110, respectively, and are ANDED together by AND gate 102. The individual monitoring of the 4 OUT-ACCEPT signals is enabled by the inverse of the corresponding CONNECT signal, shown typically by gate 192 generating NOT CONNECT 11 going to gate 104. If any output port is not connected into the broadcast/multi-cast operation, its NOT CONNECT 11 is held at a logical one state. For instance, if input port 1 was executing a broadcast/multi-cast operation which did not include output port 1, NOT CONNECT 11 would be a one, driving OR gate 104 to a one, and putting a one on the corresponding gate 102 input, disabling the monitoring of OUT1-ACCEPT in the AND function provided by gate 102. This is true for all broadcast/multi-cast operations, such that only the OUT-ACCEPT interface lines involved in a particular transfer are monitored (or enabled) so as to have an effect on AND gate 102. Any enabled OUT-ACCEPT line going to a zero will cause AND gate 102 to go to a zero and pass that indication on to the IN1-ACCEPT interface signal. When all enabled OUT-ACCEPT lines go to one, a logical one will be generated by AND gate 102 and be passed to the IN1-ACCEPT interface line.

AND gate 88 is involved in detecting the REJECT condition of input port 1, which occurs when the multi-sender switch 10 is not able to establish the commanded connection to output port 1 because of a BUSY condition. REJECT is detected as the logical AND of COMMAND 11 delayed through block 86, IN1-VALID being active, and NOT CONNECT 11 being active, indicating that the connection was not made. The delay block 86 is necessary to insure that a race condition between latches 72 and 76 changing at the same clock time does not cause gate 88 to glitch erroneously because NOT CONNECT 11 does not change fast enough to the zero state. Gate 88 detects a PRE-REJECT 11 and sends this indication to AND gate 97. Gate 97 is active for standard operations and for broadcast/multi-cast operations that are to be REJECTED, as indicated by the latch 172 not being set and enabling gate 97. Gate 95 is active for only broadcast/multi-cast operations that have won the honor of being the one such operation allowed within a given multi-sender switch 10. Thus, PREBRDCAST 11 (latch 172) is set for these cases and is used to enable AND gate 95. Gate 95 indicates a WAIT to the first broadcast/multi-cast until all requested ports in the switch are available. Gate 97 generates the REJECT 11 signal indicating that a commanded operation to output port 1 is REJECTED. Gate 90 is an OR of all the possible reject conditions (REJECT 11, REJECT 12, REJECT 13, and REJECT 14)for input port 1. The IN1-REJECT is returned to the previous switch stage or the sending node, whoever is connected to input port 1. The response of a sending node to IN1-REJECT is to return IN1-BRDCAST and IN1-VALID to zero (IDLE) and cancel the operation. This causes latches 70, 72, 74, 76, 172, and 174 to reset, which makes the inputs to gate 90 inactive and resets the REJECT condition. Anytime both IN1-VALID and IN1__BRDCAST go to zeros, whether at the end or in the middle of a normal transfer, or because a REJECT is issued, the response of multi-sender switch 10 is always the same - latches 70, 72, 74, 76, 172, and 174 all are reset and input port 1 of multi-sender switch 10 returns to the IDLE state.

The multi-sender switch 10, upon receiving an OUT-REJECT from a cascaded switch stage or a receiving node, propagates the REJECT condition to its associated input port and drives the BRDCAST and VALID lines to zero to the corresponding output port. This is accomplished as follows: OUT1-REJECT is passed through gates 94, 92, and 78 to cause RESET 1 and, thereby, resets latches 74, 76, 172, and 174. Latches 74 and 76 being reset break the connection through multi-sender switch 10 of input port 1 to output port 1 causing the OUT1-DATA, OUT1-BRDCAST, and OUT1-VALID lines to go to the IDLE STATE. This propagates IDLE to the cascaded switch stages or the receiving node and causes them to reset and their OUT1-REJECT line to go inactive. Latch 76 being reset causes gate 80 to detect the PREREJECT 11 condition, and latch 172 being reset causes gate 97 to be enabled and to propagate the REJECT 11 indication to IN1-REJECT through gate 90, thus informing the previous switch stage or sending node of the reject condition. Multi-sender/switch 10 will continue to transmit the reject indication to input port 1 until it receives an IDLE command.

Gate 182 detects output port 1 broadcast busy conditions; i.e., if any of the four input ports of the multi-sender switch 10 have commanded broadcast or multi-cast operations to output port 1, gate 182 detects the logical NOR of these conditions and its output goes to a zero. Gate 80 detects output port 1 standard busy conditions, gate 180 detects all busy conditions (standard, broadcast, and multi-cast) and is delayed by block 85 for the purpose of allowing input ports 1 to 4 to operate synchronously, if desired. In this case, if all four inputs tried to select output port 1 to be connected for standard, broadcast, or multi-cast operations at approximately the same time, there could be a possible logical race condition occurring between the D and C input signals to latch 74 and-the other similar latches for input ports 2 to 4 (PRECONNECT 21, PRECONNECT 31, and PRECONNECT 41) that feed gate 80. The purpose of delay block 85 is to delay this effect and to eliminate this race condition. In asynchronous operation, this race condition also exists if two input ports are contending for the same output port and both issue connection commands which happen to be separated in time by approximately the value of delay caused by block 85. In this case, it is possible for the latch 74 data input to be changing at the same time its clock input is rising and causing a possible metastable condition at latch 74. As long as this metastable condition resolves itself within one clock (before latch 76 is clocked) and latch 74 goes to either stable condition (0 or 1), the metastability will be corrected in the prescribed manner of using double latching (74 and 76). If the metastability condition does not settle out in time and causes an error, the receiving device will detect an erroneous message, issue a reject, and cause a retransmission. If the metastability condition causes the switch to hang in an unusual state which does not lead to a reject, the transmitting device will time out, issue the IDLE command, and then retransmit the message. This is the only possible occurrence of metastability in the present invention; it is an unusual condition which is not normally encountered in the switch operation, and it can be corrected on the slight chance that it does occur.

NOR gate 112 detects any active standard, broadcast, or multi-cast command from input port 1. It detects the very first command issued after IN1-VALID goes active and then prevents any of the other commands (COMMAND 11, COMMAND 12, COMMAND 13, or COMMAND 14) from setting by causing the data input to latch 70 and similar latches associated with input port 1 (like latch 470 in FIGURE 15) to go to zero. Thus, only the first connection command will be recognized from any input port, and the following data passing through the multi-sender switch 10 will not affect the switch in any way.

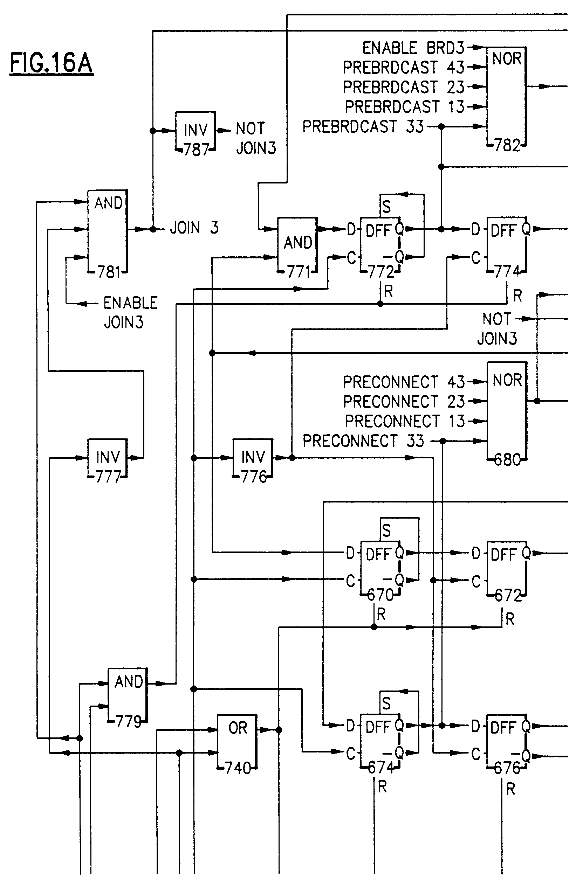

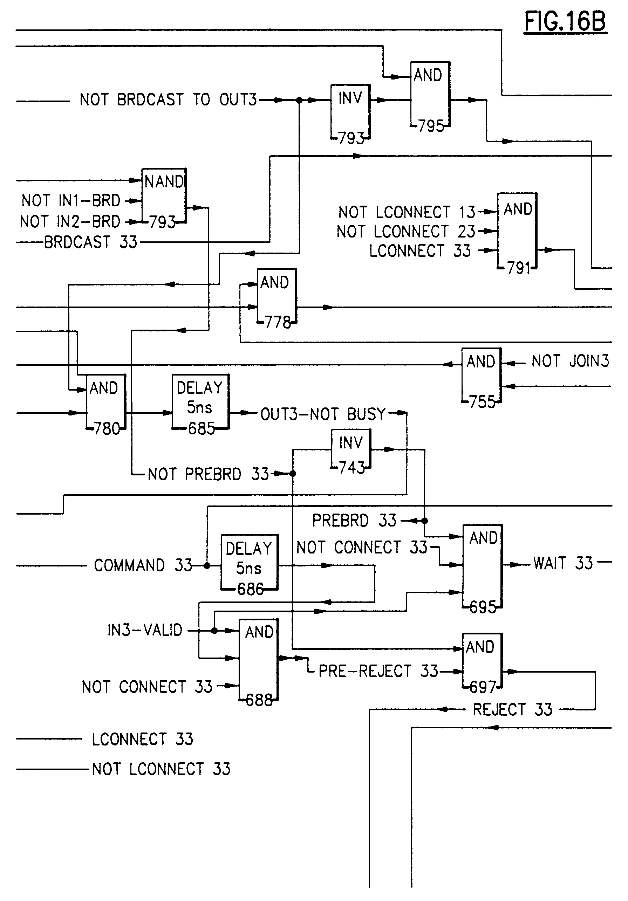

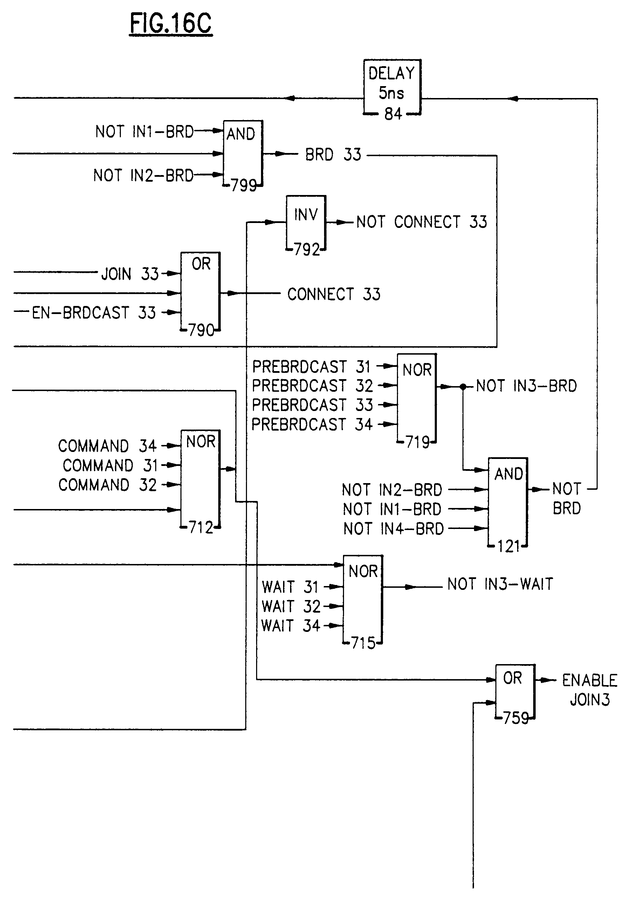

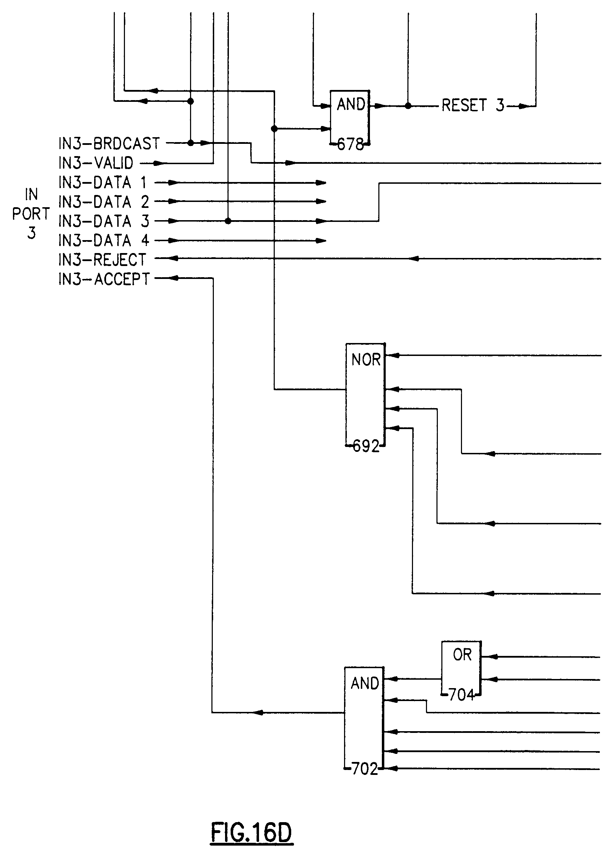

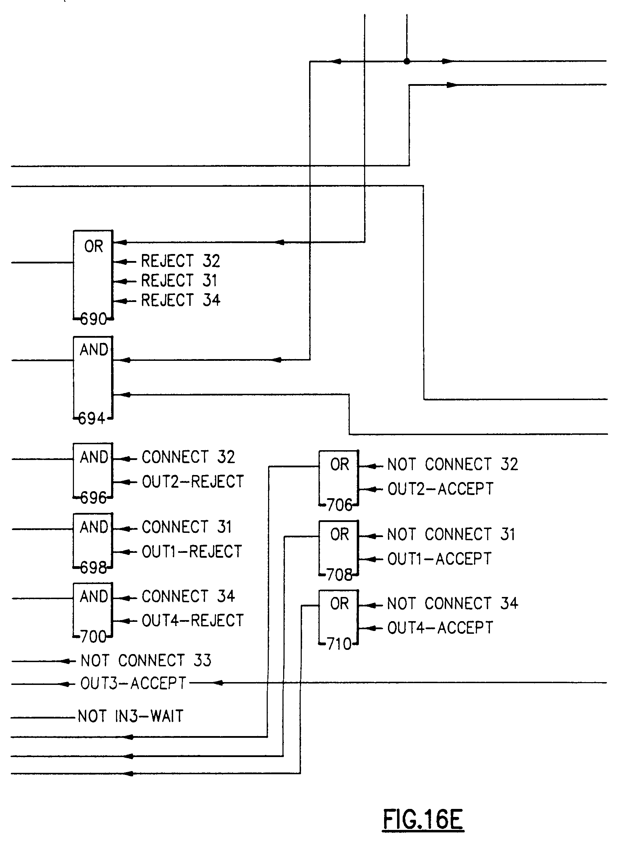

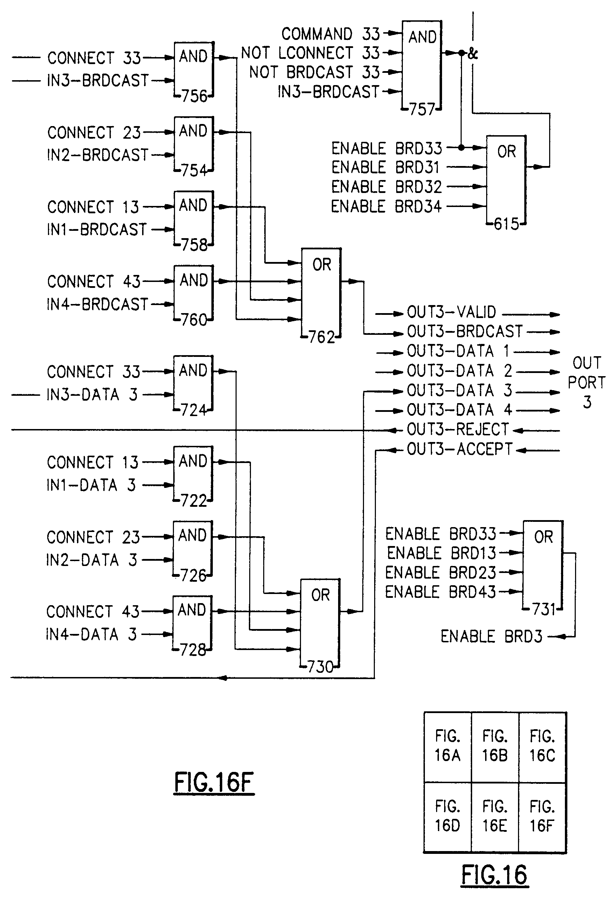

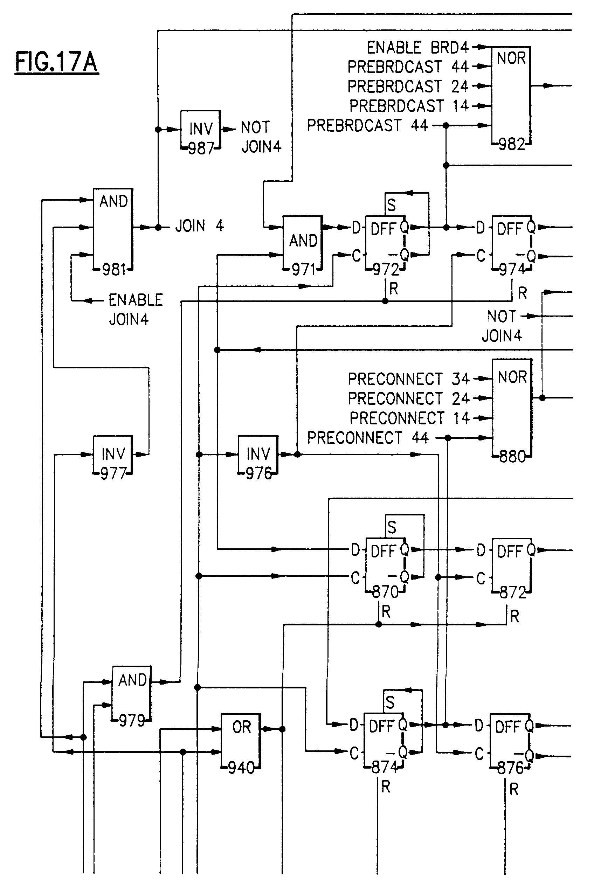

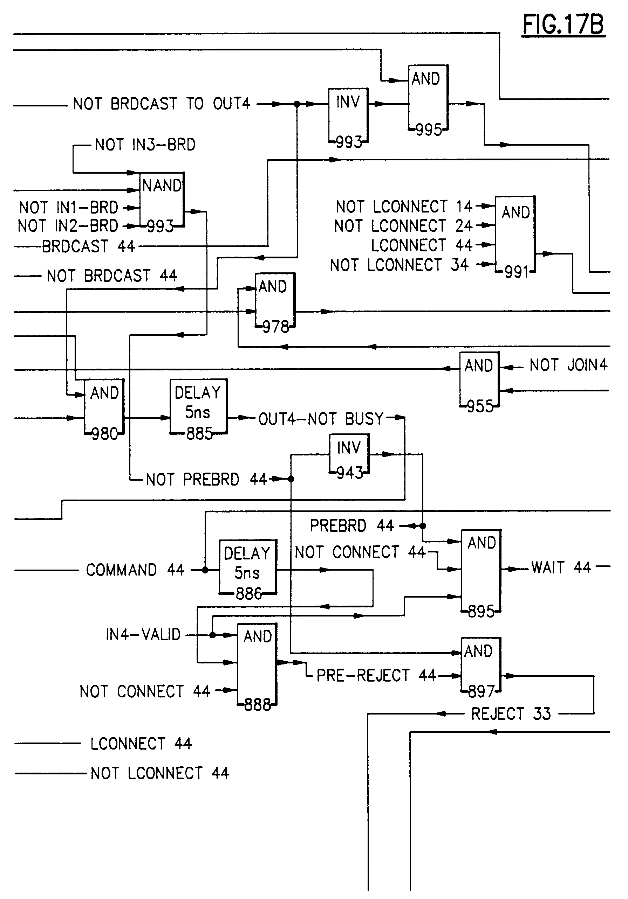

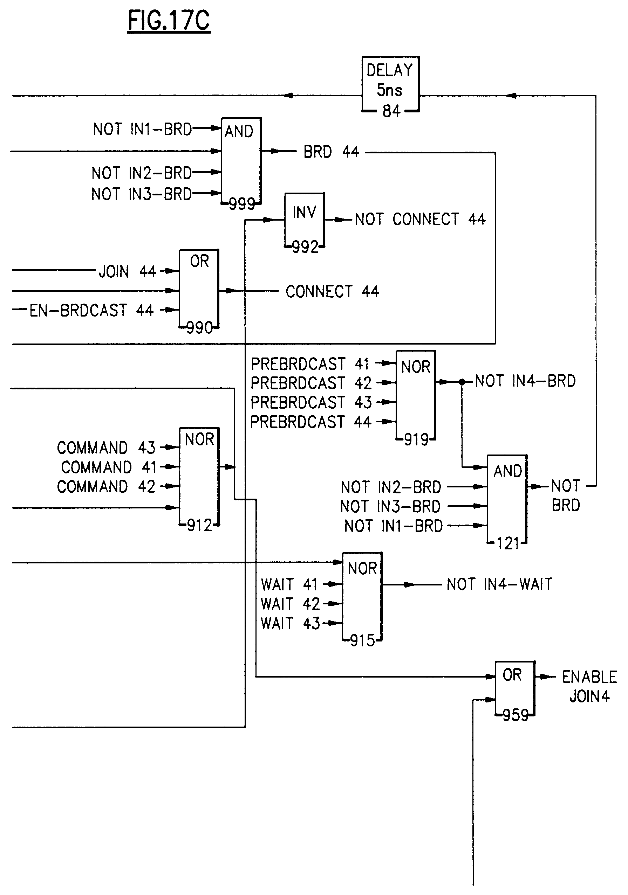

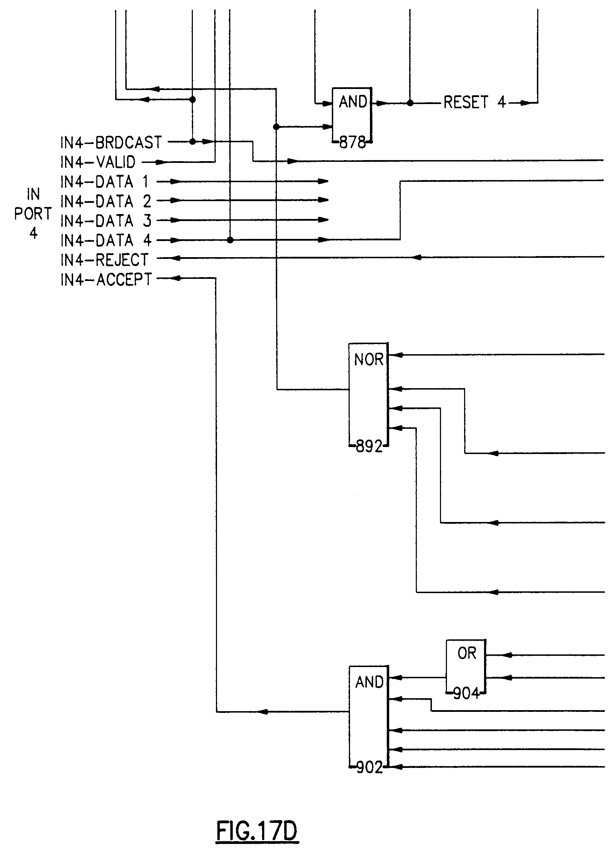

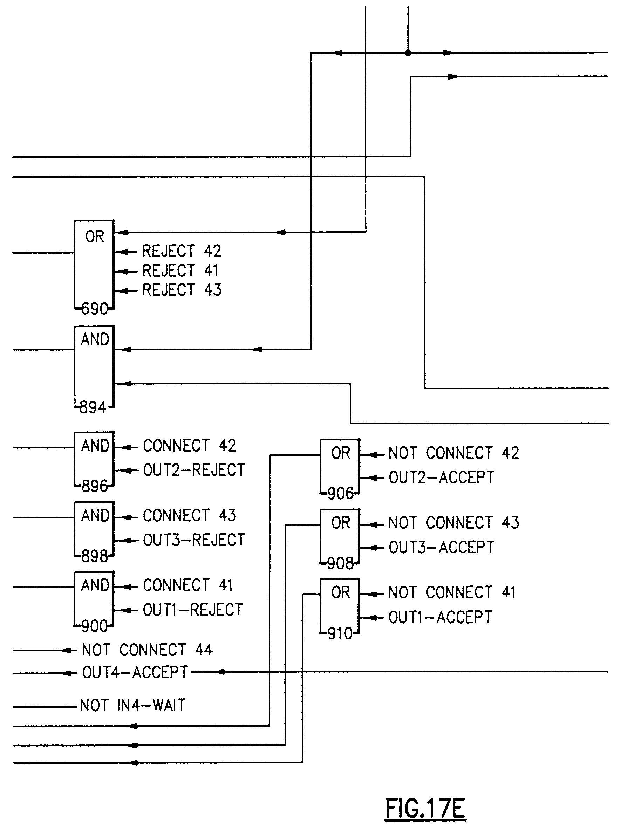

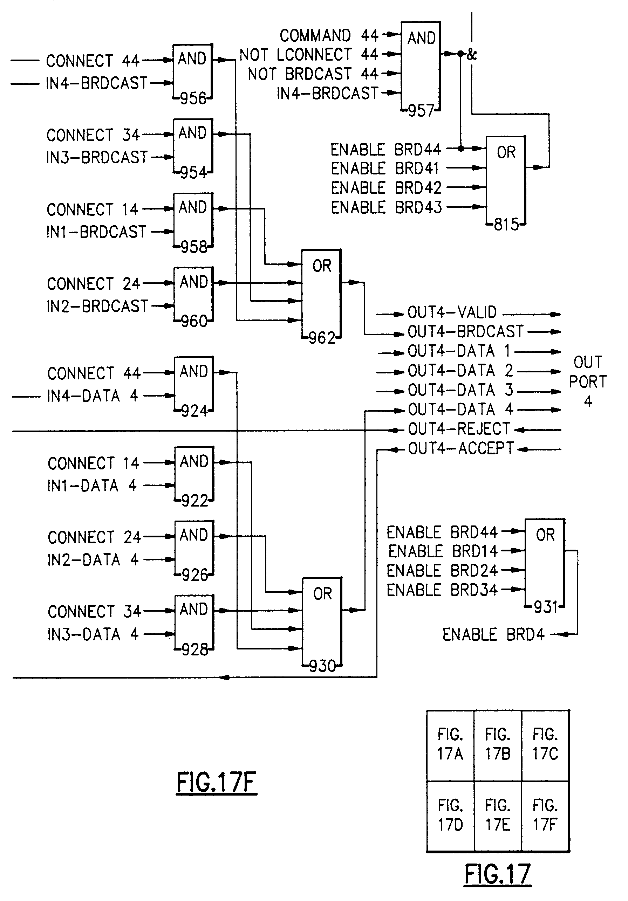

Gate 119 detects input port 1 broadcast busy conditions; i.e., if input port 1 of multi-sender switch 10 has commanded either broadcast or multi-cast operations to any of the four output ports, gate 119 detects the logical NOR of these conditions and its output goes to a zero. Gate 121 detects all busy or multi-cast conditions from any of the four input ports by going to a zero. The function of gate 121 is to go to gate 171 and all similar gates through delay 84 and prevent latch 172 and other similar broadcast latches from being set, if the multi-sender switch 10 is previously busy performing a prior broadcast or multi-cast operation (where prior means that the previous broadcast or multi-cast occurred at a point in time that was sooner than the sum of the circuit delays through gates 119, 121, and 84). If two broadcasts or multi-casts did not occur separated in time by more than the delay provide by gates 119, 121 and delay 84, the NOT BRD signal will not make it to gate 171 in time to block the setting of latch 172 or similar type latches associated with the other input ports (like latch 572 in FIGURE 15). This leads to the broadcast/multi-cast contention condition between two or more input ports and results in 2 or more latches like 172 getting set at about the same time. The contention condition is handled differently than the detection of the previously busy condition which prevents two similar latches like latch 172 from being active at the same time. The contention condition is handled by gates like 599 in FIGURE 15, 799 in FIGURE 16, and 999 in Fig.17, which implement a simple priority scheme to handle this case. Gate 599 in FIGURE 15 gates off the effect of latch 574 of FIGURE 15 that was set at the same time as latch 174 of FIGURE 13. The priority scheme used is that if input port 1 has issued a broadcast or multi-cast operation, it will dominate over any similar operation issued by any other port. Therefore, input port 1 wins the broadcast honors when there is contention with any other port. It does this by inhibiting the 3 other broadcast possibilities to output port 1 through gates like 599, 799, and 999, where NOT IN1-BRD being set to a zero gates off any other attempt by another input port to do a broadcast or multi-cast operation to output port 1. Note that input port 1 (FIGURE 13) does not require any priority gate similar to gates 599, 799, and 999, since it is high priority and can never be gated off. Likewise, if input port 2 being the second highest priority is attempting to perform a broadcast or multi-cast operation and input port 1 is not, it will win the broadcast honors by gating off the attempts of any other input ports through gates like 799 and 999. If input port 3 (the third highest priority) is attempting to perform a broadcast or multi-cast operation and input port 1 and 2 are not, it will win the broadcast honors by gating off the attempts of input port 4 through gates like 999. Input port 4 wins the broadcast honors only if no other input port is contending with it. The input port which wins the broadcast honors makes the broadcast and multi-cast connections and performs the operation as usual. The input ports that lose the broadcast contention competition issue a REJECT to the previous network stage or the sending node, whoever is attached to the input port. This is accomplished through gate 593 in FIGURE 15 which is forced to a one by the NOT IN1-BRD signal being a zero. Gate 593, in turn, enables gate 497 and causes REJECT 21 to be returned in the normal fashion.

Referring to FIGURE 15, and assuming that input port 2 is trying to broadcast or multi-cast without encountering contention or busy conditions to output port 1, latches 572 and 574 will be set and gate 599 will go to a one to indicate that broadcast or multi-cast from input port 2 to output port 1 (BRDCAST 21) has won the broadcast honors. Similarly, in FIGURE 13 the setting of latch 174 (BRDCAST 11) means that input port 1 has won the broadcast honors to output port 1, and will inhibit all other input ports from winning that honor. The winner of the broadcast honors will not REJECT the broadcast or multi-cast command and gate 97 in FIGURE 13 is disabled by the NOT PREBRDCAST 11 input going to a zero and preventing a REJECT from being issued. Instead, PREBRDCAST 11 (the output of latch 172) being a one, enables gate 95 to generate and reroute any conditions which otherwise might have issued a REJECT, like the LCONNECT 11 latch's not getting set to a one when input port 1 initiates the broadcast or multi-cast operation. Actually, there are two possible conditions that can occur when a broadcast or multi-cast is initiated and wins the honors. For either case, the latches 70, 72, 172 and 174 always get set. However, the third set of latches 74 and 76 might both get set or neither get set leading to the 2 possible conditions. Latches 74 and 76 will get set if no other input port has established a connection for a standard operation to output port 1 when the broadcast is initiated. Note that it is impossible for any previous broadcast or multi-cast to be connected to output port 1 at this time, or input port 1 would not have won the honors and set latch 174. However, it is possible for output port 1 to be connected for the purpose of performing a standard operation. In the case where latch 76 does not get set, latch 174 will set and hold the broadcast or multi-cast operation pending until output port 1 and any other output port involved in the broadcast or multi-cast become available. In this case of holding a broadcast pending, the multi-sender switch 10 drives ACCEPT to a zero until the output ports become free. This is accomplished through gates 95, 115, and 102. Gate 95 detects that the LCONNECT 11 latch was not set because it was blocked by gate 80, through 180, 85, and 74 due to output port 1 being busy because of a standard connection from another input port. Gate 80 being a zero also blocks gate 178, such that both LCONNECT 11 and EN-BRDCADST 11 inputs to gate 190 are both zeroes, causing gate 192 to go to a one and propagating through gate 95 as enabled by IN1-VALID and latch 172 both being ones. This causes the WAIT 11 condition to go to one from gate 95, telling input port 1 to WAIT because the connection to output port 1 is not presently available. This is passed through gate 115, where it is NORed with similar indications for input port 1 trying to connect to output port 2, 3 or 4 also. Thus any commanded connection from input port 1 to any output which is presently unavailable will cause gate 115 to go to zero. This in turn will send a zero through gate 102 to IN1-ACCEPT and cause pulse 71A of FIGURE 10 to go to a zero and hold there for the duration of the busy condition.

When a previously busy output port becomes available, its PRECONNECT signal generated by a latch like 74 will go to a zero, and gate 80 will go to a one. Gate 80 going to a one starts the execution of the broadcast or multi-cast operation which has been held pending or WAITing at multi-sender switch 10. Gate 178 becomes enabled by gate 80 and passes the EN-BRDCAST 11 signal to gate 190 which causes CONNECT 11 to go to a one and make the commanded broadcast or multi-cast connection between input port 1 and output port 1 through gates like 154, 162, 122, and 130. At the same time gate 192 is driven to zero and revokes the WAIT 11 condition through gate 95. Similarly, when all the other possible WAIT conditions for other output ports have been revoked, gate 115 goes to a one and cause the pulse 71A in FIGURE 10 on IN1-ACCEPT to go to a one, thus informing the attached node or previous switch stage that all the commanded broadcast or multi-cast connections in this particular switch have been made successfully.

The other possible case of the two conditions that can occur when a broadcast or multi-cast is initiated and wins the honors is that there is not a previous standard connection active to output port 1 and latch 76 gets set to a one during initiation. In this case, the IN1-ACCEPT will also pulse to zero (71A in FIGURE 10) even if no WAIT condition exists for any output port. Latch 172 sets prior to latch 76 by one cycle time and causes the WAIT 11 signal to go to a one for one cycle until latch 76 sets and causes gate 192 to go to a zero through gate 190. Note that for this case both inputs to OR gate 190 are active and CONNECT 11 is driven to a one from two sources, but the effect is still the same - a connection is established between input port 1 and output port 1.

After a single-sender broadcast or multi-cast connection has been established through all stages of the network, as described above, the receiver sync field and multi-sender command are transmitted through the multisender switches from the single sending node to all connected nodes as shown in FIGURE 9. Each node receiving the multi-sender command joins the broadcast or multi-cast operation in progress by initiating its own broadcast or multi-cast operation, similar to that described above but over different input paths into the network. Each node proceeds to win broadcast and multi-cast connections into the network as far as possible until it receives a rejection as generated by a gate like 97 of FIGURE 13. The broadcast/multi-cast attempt of any sending node (such as node 1) trying to JOIN an operation in progress will get rejected if it is not the first input port at a particular multi-sender switch 10 to request a broadcast/multicast operation; i.e., it does not win the broadcast honors at that multi-sender switch 10. If the broadcast honors are not won, latches 172, 174, 74, and 76 will not get set; neither will the CONNECT 11 signal from gate 190. Therefore, after the failed attempt to establish a broadcast connection, gate 88 will become active due to latch 72's getting set, but gate 190's not getting set. This PRE-REJECT 11 condition is passed through gate 97 because latch 172 did not get set by the broadcast attempt. This, in turn, causes OR gate 90 to go active and the broadcast REJECT to be passed back to the sending node. The reject can ripple back through the stages of the network to the sending node, resetting in the normal way latches 172, 174, 74, and 76 at each multi-sender switch 10 that it passes through.

When the sending node has its broadcast rejected, it responds by dropping the IN1-VALID signal, but leaving the IN1-BRDCAST signal active. This has several effects on the multi-sender switches in the network. First, any connections that were established by the rejected broadcast command are maintained by IN1-BRDCAST remaining active. This occurs through gate 140 which prevents latches 70 and 72 from being reset. Note that latches 172, 174, 74 and 76 get reset by gate 78 when the REJECT occurs. Latch 72 (COMMAND 11) staying set, while IN1-BRDCAST's remaining active feeds gate 157 and causes it to go to 1, thereby reconstructing the indication that the broadcast attempt had successfully ENABLED the BRD11 connection (broadcast of input 1 to output 1). Secondly, gate 181 detects the condition of IN1-BRDCAST being one and IN1-VALID being zero as a JOIN command and causes gate 181 to go to a one if the ENABLE JOIN1 signal from OR gate 159 is set. The ENABLE JOIN1 signal is used to prevent the same states of IN1-BRDCAST (1) and IN1-VALID (0) from causing gate 181 to go active during the PAUSE and RE-SYNC operation. For PAUSE and RE-SYNC, either input NOT CONNECT 11 or NOT BRDCAST 11 will be a zero causing gate 157 and 159 to go to a zero. This is enabled at gate 159 because gate 112 is also a zero since an input port 1 command will be active. Gate 159 being zero prevents gate 181 from going to a one for PAUSE and RE-SYNC operations. However, for the JOIN operation that we are presently describing, gate 157 will be a one, which forces gate 159 to a one and allows gate 181 to go to a one -thus detecting the JOIN command issued over input port 1 (JOIN1). JOIN 1 gets inverted in gate 187 and goes to gate 155, where it, in conjunction with any connection command being issued from input port 1 as detected by gate 112, inhibits any further setting of latches 172, 174, 70, and 72 by any pulses transmitted on the IN1-DATA lines. Likewise, NOT JOIN1 (gate 187) goes to gate 180 to prevent setting of latches 74 and 76 by any later pulses transmitted on the IN1-DATA lines.

ENABLE BRD11 signal (gate 157) going to a one also causes gate 131 to go to one, which ripples through 182 and 193 to provide a logical one to gate 195 to indicate that there is an active broadcast or multi-cast operation in progress at output port 1. When gate 193 is a one, it indicates that there is an operation in progress at output port 1 which should be JOINed. When gate 193 is a zero, it indicates that there is no operation in progress at output port 1 and no JOIN operation should take place. Gate 195 then becomes active during the JOIN command if gate 193 is a one, and indicates that input port 1 should join the broadcast or multi-cast in progress at output port 1 (JOIN 11). The JOIN function is actually executed by gate 190 which uses the JOIN 11 signal to cause CONNECT 11 to go active and actually connect input port 1 to output port 1 as enabled through gates 154, 122, and similar gates that connect the control and data lines of input port 1 to the corresponding output port 1 control and data lines. Other inputs to OR gates like 162 and 130 can be active simultaneously, which provides the OR function exploited by multi-sender operations.

Referring to FIGURE 14, similar logic to FIGURE 13 is shown, but this logic controls the connection of input port 1 to output port 2. All the gates have exactly the same functions as they did in FIGURE 13, except that they apply to output port 2, instead of output port 1. Some of the gates in FIGURE 13 can be reused in FIGURE 14 without being duplicated; these gates retain the same numbers as they had in FIGURE 13. Some of the gates in FIGURE 14 perform functions identical to the functions performed in FIGURE 13 but relate to output port 2 instead of output port 1; these gates must be unique for output port 2 and are assigned new numbers to indicate their uniqueness as compared to the gates in FIGURE 13.

Referring to FIGURE 15, similar logic to FIGURE 13 is shown, but this logic controls the connection of input port 2 to output port 1. All the gates have exactly the same functions as they did in FIGURE 13, except that they apply to output port 1, instead of output port 2. Some of the gates in FIGURE 13 can be reused in FIGURE 15 without being duplicated; these gates retain the same numbers as they had in FIGURE 13. Some of the gates in FIGURE 15 perform functions identical to the functions performed in FIGURE 13 but relate to input port 2 instead of input port 1; these gates must be unique for input port 2 and are assigned new numbers to indicate their uniqueness as compared to the gates in FIGURE 13.

Referring to FIGURE 16, similar logic to FIGURE 13 is shown but this logic controls the connection of input port 3 to output port 3. The gates in FIGURE 17 perform functions identical to the functions performed in FIGURE 13, but relate to input and output ports 3 instead of 1; these gates must be unique for input and output ports 3 and are assigned new numbers to indicate their uniqueness as compared to the gates in FIGURE 13.

Referring to FIGURE 17, similar logic to FIGURE 13 is shown but this logic controls the connection of input port 4 to output port 4. The gates in FIGURE 17 perform functions identical to the functions performed in FIGURE 13 but relate to input and output ports 4 instead of 1; these gates must be unique for input and output ports 4 and are assigned new numbers to indicate their uniqueness as compared to the gates in FIGURE 13.

Figures 13 to 17 show all the unique circuit implementations required by multi-sender switch 10. Eleven further replications of the same functions shown in FIGURE 13 are required to totally define multi-sender switch 10 to provide connections from input port 1 to output port 3, input port 1 to output port 4, input port 2 to output port 2, etc. However, these implementations are an obvious extension of Figures 13 to 17 and are not shown here.

Other Preferred Embodiments

Other embodiments which we may prefer to use in certain instances are within the scope of our inventions and will be described by way of example of changes to the preferred embodiment which has been described with reference to the drawings.

For example, the multi-sender switching apparatus 10 is not restricted to 4 input ports and four output ports but could be any number of I input ports and Z output ports, where I and Z can be independent values ranging from 2 to any large number, so long as the number of data lines per input and output port are equal or greater than Z.

For example, the multi-sender switching apparatus 10 could additionally supply error detection parity on each multi-sender command or transfer, if so desired, or other pertinent information by using the REJECT interface line which is normally unused at this time to carry the parity indication or other information.

In general we have provided a simultaneous, multi-sending media for logically ORing data from a plurality of different sources and transmitting the ORed data signals over an asynchronous digital communications network to a plurality of receiving elements. Our preferred multi-sender switch has a number of input ports: one for each of said number of different sources to generate the respective data signals; and a number of output ports: one for each of said number of receiving elements. In such a multi-sender switch we provide a set of common lines which are decoded to command multiple functions including point to point connections, broadcast or multi-cast connections, multi-sender connections, or pause and re-synchronization functions. The multi-sender switch is non-buffered, and there is no need for queuing.

Clearly, the inventions which we have described by way of example and in illustration of our best mode of practicing the inventions, in the various embodiments described, provide a basis for much potential growth. Accordingly, it will be understood that those skilled in the art, both now and in the future, will envision further improvements even by way of invention, and these should be understood to be within the claimed scope which should be construed to protect and preserve the rights of the inventors.

**Claims**

1. A single-sender and/or multi-sender unbuffered asynchronous network system comprising:
   a plurality of transmitting elements;
   a plurality of receiving elements;
   a multi-sender switch apparatus means for coupling said elements asynchronously through input to output port connections for establishing point to point input to output port connections, single input to multiple or all output port connections, and multiple or all input port connections to multiple or all output port connections.

2. The system of claim 1 wherein said apparatus can perform a logical OR function on a plurality of different, simultaneous data sources being received into an asynchronous digital communications network, and transmit the result to any number of receiving elements.

3. The system of claim 2 wherein the said source and receiving elements can be one and the same and transmit data to the OR function over a first input port to the network, while simultaneously receiving the result of the OR function over a second output port from the said network.

4. The system of claim 2 wherein said multi-sender switching apparatus is totally self-contained and makes all input to output port standard point to point, broadcast, multi-cast, or multi-sender connection decisions based on connection commands received over the said set of input port interface signals without requiring any other external interfaces or clock generation support.

5. The system of claim 2 wherein said apparatus can support concurrently multiple standard commands or messages, plus one broadcast, multi-cast or multi-sender OR function simultaneously within the same said apparatus.

6. The system of claim 2 wherein said apparatus can support interruptions in the data flow across the said multi-sender switch and still maintain the previously commanded connection intact, so that the data flow many proceed at a later time without the necessity of commanding the said multi-sender switch to re-establish the previous connections.

7. The system of claim 2 wherein said apparatus or cascaded apparatus devices are capable of performing logic functions within the unbuffered apparatuses themselves in such a manner that the attached elements can make use of the said devices to perform calculations for the system such as arbitration, ORing, or other logical functions.

8. The system of claim 2 wherein said apparatus is capable of receiving a multi-sender operation cancellation indication at any time during the operation as controlled by the source and its capability to cause said cancellation by resetting the said VALID interface control signal of claim 2, wherein is controlled the enabling and terminating of data message transmissions.

9. The system of claim 2 wherein said apparatus can be commanded by any input port to cause the same said input port to join any broadcast or multi-cast operation in progress by ORing the said input port into the operation in progress.

10. The system of claim 2 wherein said apparatus is capable of providing a positive feedback indication defining the advancement of the multi-sender operation to the controlling node of the multi-sender operation from all nodes selected to receive multi-sender broadcast or multi-cast data or commands.

11. The system of claim 9 wherein said apparatus has the ability to cause the said input port to join an operation in progress is independent of the input port selected and can occur concurrently on any subset or all input ports simultaneously, such that several or all input ports can join an operation in progress and they will all be joined by a logical OR function.

12. The system of claim 9 wherein said apparatus has the ability to cause the said input port to join an operation in progress based on the transmission of a broadcast or multi-cast command. Wherein the said broadcast or multi-cast command will proceed into the network making connections in as many stages as possible until it gets rejected, and upon rejection the said multi-sender switch apparatus will remember the connections established by the said broadcast or multi-cast command prior to its rejection and re-establish those connections at a later time when it receives a JOIN command.

13. The system of claim 9 wherein said apparatus has the ability to cause the said input port to join an operation in progress based on the issuing of a JOIN command as detected by the decoding of two interface signals unique to each input port without the assistance of any buffering or clocking.

14. The system of claim 9 wherein said apparatus has the ability to cause the said input port to join an operation in progress based on the said apparatus examining and determining which connections are in progress and which connections are not, and causing the input port to join only those connections that are in progress or remembered from a rejected broadcast or multi-cast operation and not to establish any new connections to output ports.

15. The system of claim 9 wherein said apparatus has expansion means for cascading together identical multi-sender switching apparatus devices by tying the output ports of said first multi-sender switching apparatus to the input ports of other said multi-sender switching apparatus devices; wherein all the said functions performed by a single invention apparatus can be performed equally well, but on a larger scale, when cascaded.

16. The system of claim 10 wherein said positive feedback indication is not affected in anyway whatsoever by nodes that are not selected to participate in the said broadcast or multi-cast transmission of data or command signals.

17. The system of claim 10 wherein said positive feedback indication has the ability to perform handshaking sequences with the VALID control signal of claim 2, for the purpose of stepping the multi-sender transmissions in a controlled and synchronized manner.

18. The system of claim 10 wherein said positive feedback indication has the ability to coordinate and delay the progress of the multi-sender operation until all sending nodes have given a positive indication that they are ready to advance.

19. A multi-sender switching apparatus comprising a plurality of input and output ports:

a multi-sender connection control circuit for each input port, and

a multiplexer control circuit for each output port for connecting any of I inputs to any of Z outputs,

where I and Z can each assume any unique value greater than 2, and

a multiplexer control circuit for each of I input ports for reporting a data rejection indication from any of Z outputs to the said input port,

a logical AND circuit for each of I input ports for reporting a positive feedback indication of receiving a successful data transmission from any of Z output ports to the said input port, and

a VALID interface control signal, wherein is controlled the enabling and terminating of multi-sender operations.

20. The apparatus of claim 19 further comprising multi-sender connection control circuitry which operates asynchronously in relation to input signals received at each input port and decodes two input signals to determine which of: IDLE, point to point, broadcast or multi-cast, multi-sender, or pause and re-sync modes it should operate.

21. The apparatus of claim 19 further comprising multi-sender connection control circuitry which operates asynchronously in relation to input signals received at each input port and without any needed clock input of any kind to perform its control and connection functions, and which employs no buffering of data messages of any kind, and decodes two input signals to determine which of 5 modes in which it should operate: IDLE, point to point, broadcast or multi-cast, multi-sender, or pause and re-sync.

FIG.1

FIG.4

MULTI-SENDER/SWITCHING APPARATUS

NODE 1 — 20

FROM SWITCH

TO SWITCH

INPUT PORT 1

CONNECT 11 → AND 21

CONNECT 21 → AND 23

CONNECT 31 → AND 25

CONNECT 41 → AND 27

OR 5 → OUTPUT PORT 1

NODE 2 — 22

FROM SWITCH

TO SWITCH

INPUT PORT 2

CONNECT 12 → AND 29

CONNECT 22 → AND 35

CONNECT 32 → AND 37

CONNECT 42 → AND 39

OR 3 → OUTPUT PORT 2

FIG. 2A

FIG. 2B

**FIG.2A**

**FIG.2**

23

FIG.2B

FIG.3

EXAMPLE: ALL 16 NODES BROADCAST TO ALL 16 NODES SIMULTANEOUSLY

FIRST STAGE OF
MULTI-SENDER/SWITCHES

SECOND STAGE OF
MULTI-SENDER/SWITCHES

## FIG.5

EP 0 506 135 A2

EXAMPLE: NODE 1, 7, 8, AND 12 MULTI-CAST TO NODES 2,4,10, AND 12 SIMULTANEOUSLY

FIRST STAGE OF
MULTI-SENDER/SWITCHES

SECOND STAGE OF
MULTI-SENDER/SWITCHES

## FIG.6

EP 0 506 135 A2

**4X4 MULTI-SENDER SWITCH**

FIG.7

| MESSAGE FIFO | M—SENDER COMMAND & DATA |
|---|---|
| — 56 — | —52— |

DATA BITS

| 4 | 0 | SHIFT REG. 1 |
|---|---|---|
| 5 | 1 | SHIFT REG. 2 |
| 6 | 2 | SHIFT REG. 3 |
| 7 | 3 | SHIFT REG. 4 |

— 54 —

40 MHZ
(ALL SHIFT REGISTERS
SYNCHRONIZED BY
SAME CLOCK)

INPUT PORT 1          — 14 —          OUTPUT PORT 1

4X4 MULTI—SENDER/SWITCH

31          41

IN1—DATA 1 →          → OUT1—DATA 1
IN1—DATA 2 →          → OUT1—DATA 2
IN1—DATA 3 →          → OUT1—DATA 3
IN1—DATA 4 →          → OUT1—DATA 4
IN1—BRDCAST →          → OUT1—BRDCAST
3 CONTROL LINES          3 CONTROL LINES

32          42

IN2—DATA 1 →          → OUT2—DATA 1
IN2—DATA 2 →          → OUT2—DATA 2
IN2—DATA 3 →          → OUT2—DATA 3
IN2—DATA 4 →          → OUT2—DATA 4
IN1—BRDCAST →          → OUT2—BRDCAST
3 CONTROL LINES          3 CONTROL LINES

INPUT PORT 2          OUTPUT PORT 2

FIG.8

# FIG.9

MULTI-SENDER SWITCHES

FROM NODE 1 → 
FROM NODE 2 → 
FROM NODE 3 → 
FROM NODE 4 → 10A

11

TO NODE 1
TO NODE 2
TO NODE 3
TO NODE 4
10E

TO NODE 5
TO NODE 6
TO NODE 7
TO NODE 8
10F

TO NODE 9
TO NODE 10
TO NODE 11
TO NODE 12
10G

TO NODE 13
TO NODE 14
TO NODE 15
TO NODE 16
10H

FIRST STAGE OF NETWORK

SECOND STAGE OF NETWORK

381

387

| CLOCK TIME | -2 | -1 | 0 | 1 | 2 | 3 | 4 | 5 | 6 | 7 | $n$ | $n+1$ | $n+2$ | $n+3$ | $n+4$ |
|---|---|---|---|---|---|---|---|---|---|---|---|---|---|---|---|
| | | | | SWITCH CONNECTION CONTROL | | | | | | MULTI-SENDER TRANSFERS | | | | | |
| IN3-BRDCAST | 0 | 0 | 1 | 1 | 1 | 1 | 1 | 1 | 1 | 1 1 1 1 1 | 1 1 1 1 | 0 | 0 | 0 | 0 |
| IN3-VALID | 0 | 1 | 1 | 1 | 1 | 1 | 1 | 1 | 1 | 1 1 1 1 1 | 0 1 1 1 | 1 | 0 | 0 | 1 |
| IN3-DATA 1 | 0 | 0 | 0 | 1 | 0 | 1 | 0 | 1 | X | M1 | M5 | 0 | 0 | 0 | 0 |
| IN3-DATA 2 | 0 | 0 | 0 | 1 | 0 | 1 | 0 | 1 | X | M2 | M6 | 0 | 0 | 0 | 0 |
| IN3-DATA 3 | 0 | 0 | 0 | 1 | 0 | 1 | 0 | 1 | X | M3 | M7 | 0 | 0 | 0 | 0 |
| IN3-DATA 4 | 0 | 0 | 0 | 1 | 0 | 1 | 0 | 1 | X | M4 | M8 | 0 | 0 | 0 | 1 |
| IN3-REJECT | 0 | 0 | 0 | 0 | 0 | 0 | 0 | 0 | 0 | 0 0 0 0 0 | 0 0 0 0 | 0 | 0 | 0 | 0 |
| IN3-ACCEPT | 1 | 1 | 1 | 0 | 1 | 0 | 1 | 1 | 0 | 0 0 0 0 1 | 1 0 0 1 | 1 | 1 | 1 | 1 |

VALID STARTS TRANSFER
STAGE 1 BROADCAST SELECTION
STAGE 1 DEAD FIELD
STAGE 2 BROADCAST SELECTION
STAGE 2 DEAD FIELD
RECEIVER SYNC
MULTI-SENDER COMMAND
M-SENDERS JOIN 1ST TRANSFER
LAST TRANSFER
ACCEPT (POSITIVE FEEDBACK THAT ALL MULTI-SENDERS ARE TRANSMITTING)
END OF MULTI-SENDER TRANSFERS
NODE 3 CAN START ANOTHER TRANSFER

EP 0 506 135 A2

WAVE FORMS AT MULTI−SENDER/SWITCH INPUT PORT INTERFACE 33
IN RELATION TO 40 MHZ CLOCK AT SHIFT REGISTER 54

FIG.10

EP 0 506 135 A2

MULTI-SENDER EXAMPLE: NODE 3 BROADCASTS TO ALL 16 NODES,
NODE 7 JOINS THE BROADCAST

FIRST STAGE OF
MULTI-SENDER/SWITCHES

SECOND STAGE OF
MULTI-SENDER/SWITCHES

<u>FIG.11</u>

EP 0 506 135 A2

BROADCAST AND VALID LINE ENCODING

| BRD | VALID | |
|-----|-------|---|
| 0 | 0 | RESET (IDLE) |
| 0 | 1 | STANDARD TRANSFER |
| 1 | 0 | MULTI-SEND JOIN COMMAND, OR PAUSE OR RE-SYNC |
| 1 | 1 | BROADCAST OR MULTI-CAST |

PAUSE OR RE-SYNC
o 1 CLOCK TIME MIN.
o HOLDS SWITCH CONNECTIONS
o SYNC FIELD REQUIRED

FIG.12

33

FIG.13A

EP 0 506 135 A2

34

## FIG.13B

NOT BRDCAST TO OUT1 — INV 193 — AND 195

BRDCAST 11 — AND 178

PREBRDCAST 11 — AND 155 — NOT JOIN1

AND 180 — DELAY 5ns 85 — OUT1—NOT BUSY

NOT PREBRDCAST 11

COMMAND 11 — DELAY 5ns 86 — NOT CONNECT 11 — AND 95 — WAIT 11 —

IN1—VALID — AND 88 — PRE-REJECT 11 — AND 97

NOT CONNECT 11 —

REJECT 11

LCONNECT 11

NOT LCONNECT 11

35

## FIG.13C

FIG.13D

| FIG. 13A | FIG. 13B | FIG. 13C |
| FIG. 13D | FIG. 13E | FIG. 13F |

FIG.13

OR
— REJECT 12
— REJECT 13
— REJECT 14
90

AND
94

AND — CONNECT 12
— OUT2–REJECT
96

AND — CONNECT 13
— OUT3–REJECT
98

AND — CONNECT 14
— OUT4–REJECT
100

— NOT CONNECT 11
— OUT1–ACCEPT
— NOT IN1–WAIT

OR — NOT CONNECT 12
— OUT2–ACCEPT
106

OR — NOT CONNECT 13
— OUT3–ACCEPT
108

OR — NOT CONNECT 14
— OUT4–ACCEPT
110

## FIG.13E

FIG.13F

NOTE: THE DFF LATCH SHOWN ABOVE HAS THE FOLLOWING CHARACTERISTICS:
• THE TOP OUTPUT OF THE LATCH (Q) IS SET EQUAL TO THE VALUE ON THE D INPUT LINE ON THE RISING EDGE OF THE C INPUT LINE PROVIDING BOTH THE S AND R INPUTS ARE NOT ACTIVE (UP).
    THIS MAKES THE DFF LATCH A STORAGE DEVICE WHICH IS POSITIVE EDGE TRIGGERED
• THE BOTTOM OUTPUT OF THE LATCH (−Q) IS THE LOGICAL INVERSE OF THE TOP OUTPUT (Q).
• THE SET (S) AND RESET (R) INPUTS ARE NEGATIVE ACTIVE WITH RESET HAVING PRECEDENCE OVER SET, AND BOTH HAVING PRECEDENCE OVER THE C AND D INPUTS.

39

# FIG.14A

## FIG.14B

# FIG.14C

IN PORT 1

IN1-BRDCAST
IN1-VALID
IN1-DATA 1
IN1-DATA 2
IN1-DATA 3
IN1-DATA 4
IN1-REJECT
IN1-ACCEPT

AND
78

RESET 1

NOR
92

OR
106

AND
102

## FIG.14D

FIG.14E

FIG.14F

| FIG.<br>14A | FIG.<br>14B | FIG.<br>14C |
| --- | --- | --- |
| FIG.<br>14D | FIG.<br>14E | FIG.<br>14F |

FIG.14

45

EP 0 506 135 A2

FIG.15A

46

FIG.15B

## FIG.15C

IN2-BRDCAST
IN2-VALID
IN2-DATA 1
IN2-DATA 2
IN2-DATA 3
IN2-DATA 4
IN2-REJECT
IN2-ACCEPT

IN
PORT
2

AND
478

RESET 2

NOR
492

OR
504

AND
502

**FIG.15D**

FIG.15E

FIG.15F

| FIG. 15A | FIG. 15B | FIG. 15C |
|---|---|---|
| FIG. 15D | FIG. 15E | FIG. 15F |

FIG.15

FIG.16A

## FIG.16B

NOT BRDCAST TO OUT3 → INV 793 → AND 795

NOT IN1-BRD → NAND 793
NOT IN2-BRD → NAND 793
BRDCAST 33

NOT LCONNECT 13 → AND 791
NOT LCONNECT 23 → AND 791
LCONNECT 33 → AND 791

AND 778

AND 755 ← NOT JOIN3

AND 780 → DELAY 5ns 685 → OUT3-NOT BUSY

NOT PREBRD 33 → INV 743

PREBRD 33

COMMAND 33 → DELAY 5ns 686
NOT CONNECT 33 → AND 695 → WAIT 33

IN3-VALID → AND 688
NOT CONNECT 33 → AND 688 → PRE-REJECT 33 → AND 697

REJECT 33

LCONNECT 33
NOT LCONNECT 33

## FIG.16C

FIG.16D

**FIG.16E**

FIG.16F

| FIG. 16A | FIG. 16B | FIG. 16C |
| FIG. 16D | FIG. 16E | FIG. 16F |

FIG.16

57

EP 0 506 135 A2

FIG.17A

58

## FIG.17B

## FIG.17C

AND
878

RESET 4

IN4—BRDCAST
IN4—VALID
IN4—DATA 1
IN4—DATA 2
IN4—DATA 3
IN4—DATA 4
IN4—REJECT
IN4—ACCEPT

IN
PORT
4

NOR
892

OR
904

AND
902

AND

FIG.17D

**FIG.17E**

FIG.17F

FIG.17